# EUROPEAN PATENT APPLICATION

(11) **EP 4 765 971 A1**
(43) Date of publication of application: **24.06.2026**
(21) Application number: 24909845.0
(22) Date of filing: 15.08.2024
(51) Int. Cl.: H04W 68/02

(54) **PAGING MODE DETERMINATION METHOD AND TERMINAL DEVICE**

(30) Priority: 29.12.2023 CN 202311865053
(71) Applicant: Honor Device Co., Ltd., Shenzhen, Guangdong 518040 (CN)
(72) Inventor: SHAN, Baokun, Shenzhen, Guangdong 518040 (CN)
(74) Representative: Goddar, Heinz J.
(86) International application number: PCT/CN2024/112552
(87) International publication number: WO 2025/138894

(57) **Abstract**

Embodiments of this application provide a method for determining a paging mode and a terminal device, and relate to the field of communication technologies. The method includes: A first network device sends first indication information to a terminal device. The first indication information indicates a first paging mode supported by the first network device. The second network device sends second indication information to the terminal device. The second indication information indicates a second paging mode supported by the second network device. A core network device determines a third paging mode corresponding to the terminal device, and sends a first paging message to the first network device. The first paging message includes the third paging mode corresponding to the terminal device. The first network device sends a second paging message to the second network device. The second paging message includes the third paging mode corresponding to the terminal device. The terminal device, the first network device, and the second network device all determine a target paging mode. In this way, it can be ensured that the terminal device and the network devices send and receive paging based on a same procedure.

## Description

This application claims priority to Chinese Patent Application No. 202311865053.5, filed with the China National Intellectual Property Administration on December 29, 2023 and entitled "METHOD FOR DETERMINING PAGING MODE AND TERMINAL DEVICE", which is incorporated herein by reference in its entirety.

### TECHNICAL FIELD

This application relates to the field of communication technologies, and in particular, to a method for determining a paging mode and a terminal device.

### BACKGROUND

In a cellular communication system, terminal devices in an idle state and an inactive state periodically monitor paging, to initiate a procedure, such as RRC connection establishment or RRC connection resumption, in response to a paging message.

To avoid power consumption caused by continuous paging monitoring by a terminal device, currently, a PEI (paging early indication, paging early indication) technology is introduced based on a conventional paging mode. Through PEI, terminal devices associated with one paging occasion may be subgrouped, and then paging indication is performed separately for subgroups of terminal devices. Moreover, currently, a WUS (wake up signal, wakeup signal) technology is also introduced to further reduce power consumption of a terminal device.

On the premise that there are a plurality of paging modes, if a network device and a terminal device do not use a same paging mode, a paging exception may be caused.

### SUMMARY

Embodiments of this application provide a method for determining a paging mode and a terminal device, applied to the field of communication technologies. In technical solutions of this application, a network device and a terminal device can be enabled to send and receive paging based on a same procedure, allowing a network device to send a paging message to a particular terminal device in an accurate paging mode, thereby saving resources for sending paging in a network while avoiding a paging loss.

According to a first aspect, an embodiment of this application provides a method for determining a paging mode, applied to a terminal device. The method includes:
receiving first indication information sent by a first network device, where the first indication information indicates a first paging mode supported by the first network device;
receiving, when the terminal device moves into coverage of a second network device, second indication information sent by the second network device, where the second indication information indicates a second paging mode supported by the second network device; and
determining, based on the first paging mode, the second paging mode, and a third paging mode corresponding to the terminal device, a target paging mode for receiving a paging message.

In this implementation, because the terminal device, the first network device, and the second network device align the first paging mode, the second paging mode, and the third paging mode, and then the terminal device, the first network device, and the second network device determine the target paging mode based on the same manner, it can be ensured that the network device and the terminal device implement transmission of a paging message based on the same target paging mode, so that the terminal device can correctly receive paging, and when the target paging mode has an effect of reducing power consumption, it can also be ensured that the effect of reducing power consumption can be normally exerted.

In a possible implementation, the third paging mode is a paging mode supported by the terminal device, and the method further includes:
sending third indication information to the first network device, where the third indication information indicates the third paging mode.

In this implementation, the terminal device sends the third indication information to the first network device, so that the terminal device can simply and effectively report the third paging mode supported by the terminal device.

In a possible implementation, the third paging mode is a paging mode negotiated by the terminal device and a core network device, and the method further includes:
sending fourth indication information to the core network device, where the fourth indication information indicates a fourth paging mode supported by the terminal device; and
receiving first configuration information sent by the core network device, where the first configuration information indicates the third paging mode, where the third paging mode is determined by the core network device in the fourth paging mode.

In this implementation, the terminal device and core network device directly negotiate the third paging mode, thereby reducing some signaling overhead. In addition, that the terminal device and the core network negotiate the third paging mode can also improve adaptability of the determined third paging mode to a current network status.

In a possible implementation, the third indication information includes a receiver type, where the receiver type includes at least one of the following: a low-power receiver and a main receiver.

The receiver type indicates the third paging mode.

In a possible implementation, if the receiver type includes only the low-power receiver, the third paging mode includes a wakeup signal WUS-based paging mode.

If the receiver type includes only the main receiver, the third paging mode includes: a paging early indication PEI-based paging mode and a paging mode of decoding a physical downlink shared channel PDCCH at a paging occasion PO according to a cycle.

If the receiver type includes the low-power receiver and the main receiver, the third paging mode includes: the WUS-based paging mode, the PEI-based paging mode, and the paging mode of decoding a PDCCH at a PO according to a cycle.

In this implementation, it may be set that the receiver type is included in the third indication information, to indirectly indicate the third paging mode.

In a possible implementation, the third indication information includes the third paging mode, and the third paging mode includes at least one of the following: the WUS-based paging mode, the PEI-based paging mode, and the paging mode of decoding a PDCCH at a PO according to a cycle.

In this implementation, it may be set that the second paging mode is included in the second indication information, to directly indicate the second paging mode.

In a possible implementation, the third indication information includes a first parameter associated with a paging mode, where the paging mode associated with the first parameter is the third paging mode.

In this implementation, the second paging mode is indirectly indicated by reusing the first parameter. In addition, this implementation can effectively reduce signaling overhead.

In a possible implementation, the third indication information is sent through UE capability information.

In a possible implementation, when the terminal device is in coverage of the first network device, the target paging mode is a paging mode with a highest priority in at least one paging mode that exists in both the first paging mode and the third paging mode.

In a possible implementation, when the terminal device is in the coverage of the second network device, the target paging mode is a paging mode with a highest priority in at least one paging mode that exists in both the second paging mode and the third paging mode.

In this implementation, on the premise that support from both parties is ensured, an optimal paging mode may be determined as the target paging mode, to improve a paging effect.

In a possible implementation, a priority of a paging mode is pre-configured; or the priority of the paging mode is indicated by second configuration information sent by the first network device or the second network device.

In a possible implementation, the first indication information is sent by the first network device via broadcast signaling; and
the second indication information is sent by the second network device via broadcast signaling.

In a possible implementation, the method further includes:

receiving fifth indication information sent by the first network device via unicast signaling, where the fifth indication information indicates a fifth paging mode used by the terminal device for receiving the paging message.

In a possible implementation, if the fifth indication information sent via unicast signaling exists, the fifth paging mode is determined as the paging mode with a highest priority.

In this implementation, when the fifth indication information sent by the first network device in a unicast manner exists, the fifth paging mode indicated by the fifth indication information is determined as the paging mode with a highest priority, to ensure that paging is performed based on the paging mode indicated by the network device in a unicast manner, to improve a possibility of successful paging.

According to a second aspect, an embodiment of this application provides a method for determining a paging mode, applied to a first network device. The method includes:
sending first indication information to a terminal device, where the first indication information indicates a first paging mode supported by the first network device;
receiving a first paging message sent by a core network device, where the first paging message includes a third paging mode corresponding to the terminal device; and
determining, based on the first paging mode and the third paging mode, a target paging mode for sending a paging message.

In a possible implementation, the third paging mode is a paging mode supported by the terminal device, and the method further includes:
receiving third indication information sent by the terminal device, where the third indication information indicates the third paging mode.

In a possible implementation, the method further includes:
sending the third indication information to the core network device.

In a possible implementation, the third paging mode is a paging mode negotiated by the terminal device and the core network device.

In a possible implementation, the third indication information includes a receiver type, where the receiver type includes at least one of the following: a low-power receiver and a main receiver.

The receiver type indicates the third paging mode.

In a possible implementation, if the receiver type includes only the low-power receiver, the third paging mode includes a WUS-based paging mode.

If the receiver type includes only the main receiver, the third paging mode includes: a PEI-based paging mode and a paging mode of decoding a PDCCH at a PO according to a cycle.

If the receiver type includes the low-power receiver and the main receiver, the third paging mode includes: the WUS-based paging mode, the PEI-based paging mode, and the paging mode of decoding a PDCCH at a PO according to a cycle.

In a possible implementation, the third indication information includes the third paging mode, and the third paging mode includes at least one of the following: the WUS-based paging mode, the PEI-based paging mode, and the paging mode of decoding a PDCCH at a PO according to a cycle.

In a possible implementation, the third indication information includes a first parameter associated with a paging mode, where the paging mode associated with the first parameter is the third paging mode.

In a possible implementation, the third indication information is sent through UE capability information.

In a possible implementation, the target paging mode is a paging mode with a highest priority in at least one paging mode that exists in both the first paging mode and the third paging mode.

In a possible implementation, a priority of a paging mode is pre-configured; or
the method further includes:
sending second configuration information to the terminal device, where the second configuration information indicates the priority of the paging mode.

In a possible implementation, the method further includes:
sending fifth indication information to the terminal device via unicast signaling, where the fifth indication information indicates a fifth paging mode used by the terminal device for receiving the paging message.

In a possible implementation, if the fifth indication information sent via unicast signaling exists, the fifth paging mode is determined as the paging mode with a highest priority.

In a possible implementation, after the receiving a first paging message sent by a core network device, the method further includes:
sending the second paging message to a second network device, where the second paging message includes the third paging mode corresponding to the terminal device.

In a possible implementation, the second paging message further includes the fifth paging mode indicated by the fifth indication information.

According to a third aspect, an embodiment of this application provides a method for determining a paging mode, applied to a second network device. The method includes:
sending second indication information to a terminal device, where the second indication information indicates a second paging mode supported by the second network device;
receiving a second paging message sent by the first network device, where the second paging message includes a third paging mode corresponding to the terminal device; and
determining, based on the second paging mode and the third paging mode, a target paging mode for sending a paging message.

In a possible implementation, the target paging mode is a paging mode with a highest priority in at least one paging mode that exists in both the second paging mode and the third paging mode.

In a possible implementation, a priority of a paging mode is pre-configured; or
the method further includes:
sending second configuration information to the terminal device, where the second configuration information indicates the priority of the paging mode.

In a possible implementation, the second paging message further includes a fifth paging mode, where the fifth paging mode is a paging mode that the first network device instructs, via unicast signaling, the terminal device to use.

In a possible implementation, if the second paging message includes the fifth indication information, the fifth paging mode is determined as the paging mode with a highest priority.

According to a fourth aspect, an embodiment of this application provides an apparatus for determining a paging mode, including:
a receiving module, configured to receive first indication information sent by a first network device, where the first indication information indicates a first paging mode supported by the first network device, where
the receiving module is further configured to receive, when the terminal device moves into coverage of a second network device, second indication information sent by the second network device, where the second indication information indicates a second paging mode supported by the second network device; and
a processing module, configured to determine, based on the first paging mode, the second paging mode, and a third paging mode corresponding to the terminal device, a target paging mode for receiving a paging message.

According to a fifth aspect, an embodiment of this application provides an apparatus for determining a paging mode, including:
a sending module, configured to send first indication information to a terminal device, where the first indication information indicates a first paging mode supported by the first network device;
a receiving module, configured to receive a first paging message sent by a core network device, where the first paging message includes a third paging mode corresponding to the terminal device; and
a processing module, configured to determine, based on the first paging mode and the third paging mode, a target paging mode for sending a paging message.

According to a sixth aspect, an embodiment of this application provides an apparatus for determining a paging mode, including:
a sending module, configured to send second indication information to a terminal device, where the second indication information indicates a second paging mode supported by the second network device;
a receiving module, configured to receive a second paging message sent by the first network device, where the second paging message includes a third paging mode corresponding to the terminal device; and
a processing module, configured to determine, based on the second paging mode and the third paging mode, a target paging mode for sending a paging message.

According to a seventh aspect, an embodiment of this application provides a terminal device. The terminal device may also be referred to as a terminal (terminal), user equipment (user equipment, UE), a mobile station (mobile station, MS), a mobile terminal (mobile terminal, MT), or the like. The terminal device may be a mobile phone (mobile phone), a smart TV, a wearable device, a tablet computer (Pad), a computer having a wireless transmitting and receiving function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The terminal device includes a processor and a memory. The memory has computer-executable instructions stored therein. The processor executes the computer-executable instruction stored in the memory, to enable the terminal device to perform the method according to the first aspect.

According to an eighth aspect, an embodiment of this application provides a network device. The network device may be a base station (Base Transceiver Station, BTS for short) in a GSM system or a CDMA system, or may be a base station (NodeB, NB for short) in a WCDMA system, may further be an evolved base station (evolved NodeB, eNB for short), an access point (access point, AP), or a relay station in an LTE system, or may be a base station in a 5G system, or the like.

The network device includes a processor and a memory. The memory has computer-executable instructions stored therein. The processor executes the computer-executable instruction stored in the memory, to enable the terminal device to perform the method according to the second aspect and the third aspect.

According to a ninth aspect, an embodiment of this application provides a computer-readable storage medium, having a computer program stored therein. The computer program, when executed by a processor, implements the method according to the first aspect to the third aspect.

According to a tenth aspect, an embodiment of this application provides a computer program product. The computer program product includes a computer program. The computer program, when run, enables a computer to perform the method according to the first aspect to the third aspect.

According to an eleventh aspect, an embodiment of this application provides a chip. The chip or the chip system includes at least one processor and a communication interface. The communication interface and the at least one processor are interconnected via a wire. The at least one processor is configured to run a computer program or instructions to perform the method according to the first aspect to the third aspect. The communication interface in the chip may be an input/output interface, a pin, a circuit, or the like.

In a possible implementation, the chip or chip system described above in this application further includes at least one memory, and the at least one memory has instructions stored therein. The memory may be a storage unit, for example, a register or a cache, inside the chip, or may be a storage unit (for example, a read-only memory or a random-access memory) of the chip.

According to a twelfth aspect, an embodiment of this application further provides a system for determining a paging method. The system include: a terminal device, a first network device, and a second network device.

The first network device sends first indication information to the terminal device, where the first indication information indicates a first paging mode indicated by the first network device.

The second network device sends second indication information to the terminal device, where the second indication information indicates a second paging mode supported by the second network device.

When the terminal device is in coverage of the first network device, the terminal device determines, based on the first paging mode and a third paging mode corresponding to the terminal device, a target paging mode for receiving a paging message; or when the terminal device moves into coverage of the second network device, the terminal device determines the target paging mode based on the second paging mode and the third paging mode.

In addition, the first network device is further configured to receive a first paging message sent by the core network device. The first paging message includes a third paging mode corresponding to the terminal device. Therefore, the first network device determines, based on the first paging mode and the third paging mode, the target paging mode for sending the paging message.

In addition, the second network device is further configured to receive a second paging message sent by the first network device. The second paging message includes the third paging mode corresponding to the terminal device. Therefore, the second network device determines, based on the second paging mode and the third paging mode, the target paging mode for sending the paging message.

Further, in the system, the terminal device is configured to perform the method according to the first aspect and any possible design of the first aspect, the first network device is configured to perform the method according to the second aspect and any possible design of the second aspect, and the second network device is configured to perform the method according to the third aspect and any possible design of the third aspect.

It should be understood that the technical solutions of the second aspect to the twelfth aspect of this application correspond to the technical solution of the first aspect of this application, and beneficial effects obtained by the aspects and corresponding feasible implementations are similar. Details are not described again.

### BRIEF DESCRIPTION OF DRAWINGS

FIG. 1 is a diagram of a system architecture of a communication system according to an embodiment of this application;
FIG. 2 is a schematic diagram 1 of implementation of a paging mode according to an embodiment of this application;
FIG. 3 is a schematic diagram 2 of implementation of a paging mode according to an embodiment of this application;
FIG. 4 is a diagram of signaling interaction for determining a paging subgroup according to an embodiment of this application;
FIG. 5 is a schematic diagram 3 of implementation of a paging mode according to an embodiment of this application;
FIG. 6 is a diagram 1 of signaling interaction of a method for determining a paging mode according to an embodiment of this application;
FIG. 7 is a diagram 2 of signaling interaction of a method for determining a paging mode according to an embodiment of this application;
FIG. 8 is a diagram 3 of signaling interaction of a method for determining a paging mode according to an embodiment of this application;
FIG. 9 is a schematic diagram 1 of implementation of determining a target paging mode according to an embodiment of this application;
FIG. 10 is a schematic diagram 2 of implementation of determining a target paging mode according to an embodiment of this application;
FIG. 11 is a schematic diagram 1 of a structure of an apparatus for determining a paging mode according to an embodiment of this application;
FIG. 12 is a schematic diagram 2 of a structure of an apparatus for determining a paging mode according to an embodiment of this application;
FIG. 13 is a schematic diagram 3 of a structure of an apparatus for determining a paging mode according to an embodiment of this application; and
FIG. 14 is a schematic diagram of a structure of an electronic device according to an embodiment of this application.

### DESCRIPTION OF EMBODIMENTS

To facilitate clear descriptions of technical solutions of embodiments of this application, the following briefly introduces some terms and technologies involved in embodiments of this application:

### 1. Terminal device

The terminal device may be a device that includes a wireless transceiver function and can cooperate with a network device to provide communication services for a user. Specifically, the terminal device may be a user equipment (User Equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. For example, the terminal device may be a cellular phone, a cordless telephone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device or another processing device connected to a wireless modem, an in-vehicle device, a wearable device, or a terminal device in a future 5G network or a network after 5G. 5G refers to a 5th generation mobile communication technology (5th Generation Mobile Communication Technology), 5G for short.

### 2. Network device

The network device may be a device configured to communicate with a terminal device, for example, may be a base station (Base Transceiver Station, BTS) in a global system for mobile communication (Global System for Mobile Communication, GSM) or code division multiple access (Code Division Multiple Access, CDMA) communication system, or may be a base station (NodeB, NB) in a wideband code division multiple access (Wideband Code Division Multiple Access, WCDMA) system, or may be an evolved base station (Evolutional Node B, eNB or eNodeB) in an LTE system, or the network device may be a relay station, an access point, an in-vehicle device, a wearable device, a network side device in a future 5G network or a network after 5G, a network device in a future evolved public land mobile network (Public Land Mobile Network, PLMN) network, or the like.

The network device involved in embodiments of this application may also be referred to as a network device or a radio access network (Radio Access Network, RAN) device. The RAN device is connected to the terminal device, and is configured to receive data of the terminal device and send the data to a core network device. The RAN device corresponds to different devices in different communication systems, for example, corresponds to a base station and a base station controller in a 2G system, corresponds to a base station and a radio network controller (Radio Network Controller, RNC) in a 3G system, corresponds to an evolved base station (Evolutional Node B, eNB) in a 4G system, and corresponds to a 5G system in a 5G system, for example, an access network device (for example, a gNB, a centralized unit CU, and a distributed unit DU) in new radio (New Radio, NR).

### 3. Core network device

The core network device may be, but is not limited to, a mobility management entity (mobile management entity, MME)/a serving gateway (serving gateway, SGW), an MME, or the like. The MME/SGW represents being located at a same physical entity as the MME and the SGW.

### 4. Network element in a core network

A 5G core network (5G core/new generation core, 5GC/NGC) includes a plurality of functional units such as an access and mobility management function (Access and Mobility Management Function, AMF) network element, a session management function (Session Management Function, SMF) network element, a user plane function (User Plane Function, UPF) network element, an authentication server function (Authentication Server Function, AUSF) network element, a policy control function (Policy Control Function, PCF) network element, an application function (Application Function, AF) network element, a unified data management (Unified Data Management, UDM) network element, and a network slice selection function (Network Slice Selection Function, NSSF) network element.

The AMF network element is mainly responsible for services such as mobility management and access management. For example, the terminal device can transmit a control plane message with the AMF network element through an NG interface 1 (N1 for short).

### 5. RRC state

RRC (Radio Resource Control, radio resource control) in 5G includes three RRC states, which are respectively an RRC connected state (RRC CONNECTED), an RRC inactive state (RRC INACTIVE), and an RRC idle state (RRC IDLE).

### 6. AS signaling

The AS (Access Stratum, access stratum) protocol refers to a communication protocol between a terminal device and a network device. Correspondingly, AS signaling is signaling used for interaction between a network device and a terminal device.

### 7. NAS signaling

The NAS (Non Access Stratum, non-access stratum) protocol refers to a communication protocol between a terminal device and a core network device. Correspondingly, NAS signaling is signaling used for interaction between a network device and a core network device.

### 8. Other terms

In embodiments of this application, words such as "first" and "second" are used to distinguish same or similar items with a basically same function and role. For example, a first chip and a second chip are merely used to distinguish different chips, and are not intended to limit a sequence thereof. A person skilled in the art may understand that the terms such as "first" and "second" do not limit a number or an execution sequence, and the terms such as "first" and "second" do not indicate a definite difference.

It should be noted that in embodiments of this application, the term "exemplary" or "for example" is used to represent giving an example, an illustration, or a description. In this application, any embodiment or design scheme described by using "exemplary" or "for example" should not be explained as being more preferred or having more advantages than another embodiment or design scheme. Exactly, use of the term, such as "exemplary" or "for example", is intended to present a related concept in a specific manner.

In embodiments of this application, "at least one" means one or more, and "a plurality of" means two or at least two. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between associated objects. At least one of the following items (pieces) or a similar expression thereof indicates any combination of these items, including a single item (piece) or any combination of a plurality of items (pieces). For example, at least one of a, b, or c may represent: a, b, c, a-b, a-c, b-c, or a-b-c, where a, b, and c may be singular or plural.

To better understand the technical solutions of this application, based on the concepts described above, related technologies included in this application are further described below in detail.

At present, energy conservation and emission reduction is a topic of global concern. To achieve the objective of energy conservation and emission reduction, a device is usually required to minimize energy consumption without affecting services.

For example, to achieve the objective of energy conservation and emission reduction, in an existing communication system, when a terminal device does not need to communicate with a network device, the terminal device may release an RRC connection, to enter an RRC idle state or an RRC inactive state, so that the terminal device saves electric energy and reduces power consumption.

After the RRC connection between the terminal device and the network device is released, the core network device, for example, can mark the terminal device as entering an idle state or an inactive state. When needing to send downlink data to the terminal device in the idle state or the inactive state, the core network device needs to first send a paging (paging) message to all network devices in a tracking area in which the terminal device is located, so that the paging message is forwarded to the terminal device through the network devices. The tracking area includes a plurality of cells in which the terminal device can freely move, and the plurality of cells belong to at least one network device.

Correspondingly, the terminal device in the idle state or the inactive state needs to periodically monitor a paging message, and then, initiate an RRC connection procedure or an RRC resumption procedure to the network device in response to the paging message, to perform a downlink service. Specifically, after the terminal device enters a working state in response to the paging message, it means that the terminal device is woken up. Specifically, a transceiver in the terminal device is woken up, so that the terminal device subsequently communicates with the network device.

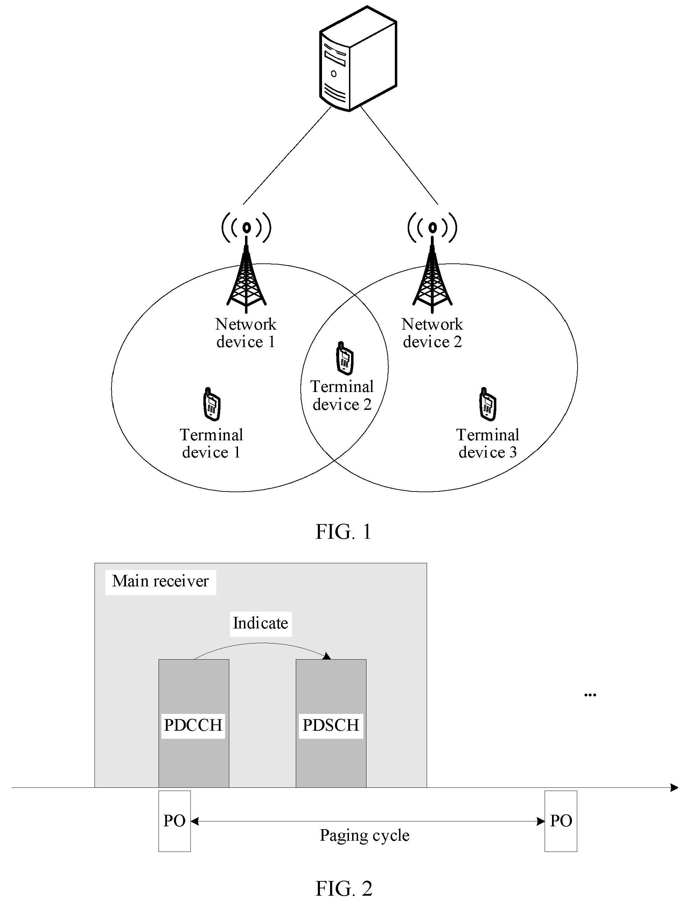

For example, based on the content described above, the communication system in this application may be described with reference to FIG. 1. FIG. 1 is a diagram of a system architecture of a communication system according to an embodiment of this application.

As shown in FIG. 1, the architecture of the communication system includes: a plurality of network device devices, a plurality of terminal devices, and a core network device.

The terminal device is configured to access a network device to perform various services (such as a voice service, a short message service, and an Internet service). For example, a terminal device 1 in FIG. 1 may access a network device 1 to perform various services, a terminal device 2 may access the network device 1 or access a network device 2 to perform various services, and a terminal device 3 may access the network device 2 to perform various services.

In addition, each terminal device can freely move in an area covered by a network. When the terminal device is in an idle state or an inactive state, a free movement area of the serving network device does not need to be updated as a tracking area (tracking area, TA) of the terminal device. The TA includes a plurality of cells in which the terminal device can freely move, and the plurality of cells are an area covered by at least one network device. The TA in which the terminal device is located may change, that is, the terminal device may have different tracking areas in different time periods or locations. The terminal device needs to register with the core network device or update the TA, so that the core network device can identify a TA in which the terminal device is located when the terminal device in an idle state or an inactive state, and further, the terminal device can be accurately paged when it is needed to send downlink data to the terminal device.

In addition, the terminal device may also move between network devices. For example, in the example in FIG. 1, it is assumed that in an initial case, the terminal device 1 is located in coverage of the network device 1, and the terminal device 1 establishes an RRC connection to the network device 1. Later, for example, the RRC connection between the terminal device 1 and the network device may be released. Then, for example, the terminal device 1 may move, to enter into coverage of the network device 2. Therefore, when paging a terminal device, both the network device 1 and the network device 2 need to page the terminal device 1, to improve a possibility of finding the terminal device through paging.

Network devices are located in an access network and configured to provide radio access services for a terminal device, so that the terminal device can access a corresponding network device to perform various services. Each network device may provide a radio access service for at least one terminal device. For example, the network device 1 shown in FIG. 1 may provide a radio access service for the terminal device 1 and the terminal device 2, and the network device 2 may provide a radio access service for the terminal device 2 and the terminal device 3.

A core network device is located in a core network and configured to manage mobility of a plurality of terminal devices, and forward, when needing to send downlink data to the plurality of terminal devices, the downlink data to the corresponding terminal devices through a plurality of network devices.

During specific implementation, when any terminal device accesses a network device, that is, when the terminal device and the network device communicate with each other, an RRC connection is established between the terminal device and the network device. When the terminal device and the network device do not need to communicate with each other any more, the connection can be released through RRC.

After the RRC connection is released, the terminal device enters an idle state or an inactive state. When the core network device needs to page a terminal device, the core network device may send a paging message to all network devices in a TA in which the terminal device is located, to find the terminal device through paging. For example, in the example in FIG. 1, assuming that a TA corresponding to the terminal device 1 includes the network device 1 and the network device 2, the core network device may send a paging message to both the core network device 1 and the core network device 2, and then the network device 1 and the network device 2 send the paging message to the terminal device 1, to accurately find the terminal device through paging.

Then, the terminal device establishes an RRC connection to the network device in response to the paging message, to receive downlink data. In addition, it should be further noted that although not shown, another device or network element may be further included in the architecture of the communication system shown in FIG. 1.

After the system architecture of the terminal device, the network device, and the core network device is described, a mechanism according to which the terminal device periodically monitors paging is then described. One of objectives of the terminal device periodically monitoring paging is to prevent the terminal from continuously monitoring downlink data, thereby saving power of the terminal device. Although such a mechanism of periodically monitoring paging is provided, currently, optimization solutions for paging are continuously researched, to further reduce energy consumption of the terminal consumed during paging.

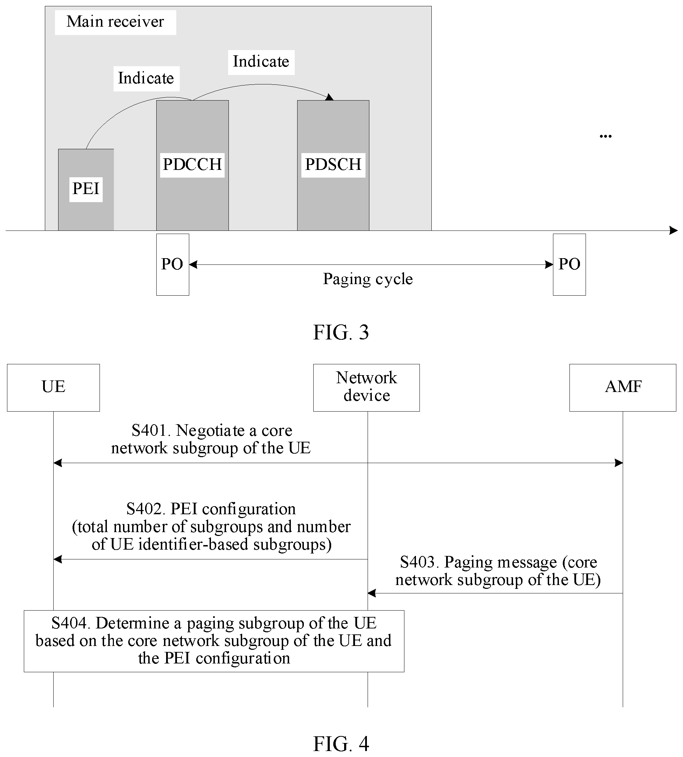

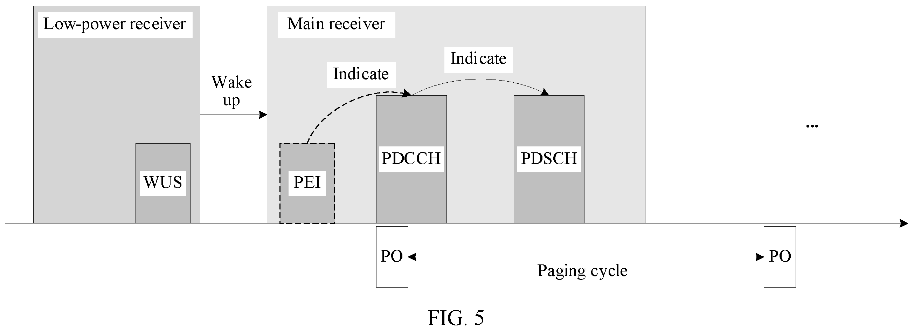

The following briefly describes a plurality of possible paging modes with reference to FIG. 2 to FIG. 5. FIG. 2 is a schematic diagram 1 of implementation of a paging mode according to an embodiment of this application. FIG. 3 is a schematic diagram 2 of implementation of a paging mode according to an embodiment of this application. FIG. 4 is a diagram of signaling interaction for determining a paging subgroup according to an embodiment of this application. FIG. 5 is a schematic diagram 3 of implementation of a paging mode according to an embodiment of this application.

### First type: Paging mode of decoding a PDCCH at a PO according to a cycle

This paging mode may also be referred to as a paging mode of directly decoding a PDCCH at a PO according to a cycle, and may be understood as a conventional paging mode or a basic mechanism of paging. First, it should be noted that a terminal device in an RRC idle state or an RRC inactive state is mainly in a sleep state, and a main receiver (main receiver, MR) of the terminal device in the sleep state is turned off.

As shown in FIG. 2, in this currently described paging mode, the terminal device in the RRC idle state or the RRC inactive state may wake up at a PO (paging occasion, paging occasion) associated with the terminal device. For example, the terminal device may wake up the main receiver, to monitor paging through the main receiver at the PO.

Each terminal device has its own associated PO, and calculation of the PO associated with the terminal device is related to parameters, such as an ID (identifier) and a paging cycle, of the terminal device. Therefore, a plurality of terminal devices may share one PO.

With reference to FIG. 2, it can be determined that the PO associated with the terminal device repeats with a paging cycle (Paging cycle) as a cycle. Therefore, the terminal device can periodically monitor paging. The terminal device can perform the operations described in this embodiment at a PO in each paging cycle corresponding thereto. Therefore, in this embodiment, implementation in only one paging cycle is used as an example for description.

When the terminal device monitors paging at the PO, for example, the terminal device may first decode a PDCCH by using a P-RNTI (Paging Radio Network Temporary Identifier, paging radio network temporary identifier).

When needing to page the terminal device, the core network device instructs the network device to send a PDCCH at a PO associated with the terminal device. Therefore, the terminal device can receive the PDCCH at the PO, and decode the PDCCH by using the P-RNTI.

If the decoding succeeds, referring to FIG. 2, the terminal device can receive a paging message (Paging Message) at a corresponding PDSCH resource based on paging message scheduling information (a time-frequency resource, a modulation and coding scheme, or the like) included in the PDCCH.

Then, if the terminal device receives the paging message at the PDSCH resource, and the paging message includes the ID of the terminal device, it indicates that the terminal device is paged. Correspondingly, the terminal device can then initiate a procedure, such as RRC connection establishment or RRC connection resumption, to the network device, to receive a downlink service in response to the paging message.

However, if the terminal device does not detect a P-RNTI scrambled PDCCH at the PO, or the paging message received at the PDSCH resource does not include the ID of the terminal device, the terminal device considers that the terminal device is not paged, and then resumes the sleep state.

In the paging mode currently described, because each PO is shared by a plurality of terminals, at one PO, all associated terminals need to monitor the PDCCH by using the P-RNTI. Moreover, in a plurality of terminal devices associated with a same PO, provided that one terminal device is paged, all terminal devices associated with the PO need to further receive a paging message of a PDSCH. For terminal devices that are not paged, this case is a false paging alarm, and power consumed by the terminal devices for receiving the PDSCH is also an unnecessary waste of power.

To improve the conventional paging mode currently described, PEI supporting paging subgrouping is introduced, to reduce power consumption of unpaged terminals, which is a second paging mode to be described below.

### Second type: PEI-based paging mode

In this implementation, based on the conventional paging mode described above, a PEI technology supporting paging subgrouping is introduced. Terminal devices associated with one PO are subgrouped, and paging indication is separately performed for terminal devices in different subgroups, thereby reducing a probability of a false paging alarm.

As shown in FIG. 3, the network device may send PEI at a fixed position before a PO, where the PEI is also DCI (Downlink Control Information, downlink control information) sent in a PDCCH. For example, the DCI includes an 8-bit (bit) bitmap (bitmap), and each bit corresponds to one paging subgroup, and indicates whether terminal devices in the paging subgroup are paged.

For example, when a bit in the PEI is 1, it may indicate that the terminal devices in the paging subgroup are paged. When the bit is 0, it may indicate that the terminal devices in the paging subgroup are not paged. Alternatively, it may be implemented reversely, that is, 0 indicates being paged, and 1 indicates not being paged. This is not limited in this embodiment.

Referring to FIG. 3, the terminal device may correspondingly monitor a P-RNTI at a PO, that is, before decoding a PDCCH, first monitor PEI at a fixed position before the PO.

In a case, if a bit of a subgroup corresponding to terminal devices in the PEI indicates that the terminal devices in the subgroup are paged, the terminal devices may perform monitoring at the PO based on the first paging mode described above, that is, decode the PDCCH by using the P-RNTI, and after the decoding succeeds, receive a paging message at a PDSCH resource indicated by the PDCCH.

In another case, if a bit of a subgroup corresponding to terminal devices in the PEI indicates that the terminals in the subgroup are identified as not being paged, the terminal devices consider that they are not be paged, and therefore, may resume the sleep state. In this way, additional power consumption caused by decoding the PDCCH and receiving the PDSCH is avoided.

Implementations of the PO and the paging cycle in the current mode are similar to those described above, and therefore, are not described in detail again.

An implementation of determining a paging subgroup of a terminal device is described below with reference to FIG. 4. In this embodiment, in a core network device, it is an AMF network element that mainly participates in paging processing. Therefore, actions of the core network device are described by using the AMF network element as a main entity in FIG. 4, and actions of the terminal device are described by using UE as a main entity in FIG. 4. However, it should be understood that, in the example in FIG. 4, the AMF network element may be correspondingly replaced with the core network device, and the UE may be correspondingly replaced with the terminal device.

As shown in FIG. 4, the method includes the following steps.

S401. The UE and the AMF network element negotiate a core network subgroup of the UE.

In this embodiment, paging subgroups for the UE include subgroups in two dimensions. One dimension is a subgroup assigned by the core network device to the UE, which is referred to a core network subgroup of the UE in this embodiment. The other dimension is a subgroup determined by a network device based on a UE ID, which is referred to as a UE ID-based subgroup in this embodiment.

The UE and the core network device negotiate the core network subgroup of the UE. Correspondingly, in the current step, for example, the UE and the AMF network element negotiate the core network subgroup of the UE. For example, there may be a maximum of eight core network subgroups, which are sequentially represented as a subgroup 0 to a subgroup 7.

S402. The network device sends a PEI configuration to the UE.

For example, the network device may send the PEI configuration to the UE in a broadcast manner. The network device sends the PEI configuration to the UE, to notify the UE of the following two parameters: a number of core network subgroups and a number of UE ID-based subgroups.

In an implementation, for example, a total number of subgroups supported per PO and the number of UE ID-based subgroups may be included in the PEI configuration. The total number of subgroups minus the number of UE ID-based subgroups is equal to the number of core network subgroups.

S403. The AMF sends the core network subgroup of the UE to the network device when the AMF needs to page the UE.

S404. The UE and the network device determine a paging subgroup of the UE based on the core network subgroup of the UE and the PEI configuration.

It may be understood that after the network device receives the core network subgroup of the UE sent by the AMF, the network device learns of the following information: the core network subgroup of the UE, the UE ID-based subgroup of the UE, the number of core network subgroups, and the number of UE ID-based subgroups.

In addition, after the UE negotiates with the AMF, the UE may determine the core network subgroup of the UE. The UE may determine the number of core network subgroups and the number of UE ID-based subgroups based on the PEI configuration broadcast by the network device. In addition, the UE may calculate a unique UE ID-based subgroup based on a UE ID of the UE.

Therefore, the UE and the network device may learn of the same information based on the interaction process described above, and then the UE and the network device may respectively determine the paging subgroup of the UE according to a preset subgroup determining rule. Since input information is consistent, and the subgroup determining rule is consistent, the UE and the network device determine the same paging subgroup.

Then, the network device generates and sends PEI based on the paging subgroup of the UE, to indicate whether the paging subgroup corresponding to the UE is paged. Correspondingly, the UE may receive and parse the PEI based on the paging subgroup of the UE, to determine whether the paging subgroup of the UE is paged.

Possible implementations of the subgroup determining rule are further described below.

First, the following two parameters are described:
- subgroupsnumperpo: Total number of core network subgroups (if any) and UE ID-based subgroups (if any) supported per PO. This parameter may be broadcast in system information, and this parameter corresponds to the total number of subgroups described above.
- subgroupsNumForUEID: Number of UE ID-based subgroups per PO. The parameter is also broadcast in the system information, and the parameter corresponds to the number of UE ID-based subgroups described above.

Based on this, the subgroup determining rule may be:
Case 1: If subgroupsNumForUEID is not included in the subgroup configuration (subgroupConfig), a core network subgroup of the UE is used as a paging subgroup in a cell provided that the core network subgroup of the UE is available to the UE.
Case 2: If both subgroupsNumPerPO and subgroupsNumForUEID are configured in subgroupConfig, and a value of subgroupsNumForUEID is the same as a value of subgroupsNumPerPO, a UE ID-based subgroup of the UE is used as a paging subgroup in a cell.
Case 3: If both subgroupsNumPerPO and subgroupsNumForUEID are configured in subgroupConfig, and subgroupsNumForUEID < subgroupsNumPerPO, it is further subdivided into the following cases:
   - A core network subgroup of the UE is used as a paging subgroup in a cell if the core network subgroup of the UE is available to the UE.
   - A UE ID-based subgroup of the UE is used as a paging subgroup in a cell if a core network subgroup of the UE is unavailable to the UE.
Case 4: If the UE does not have a core network subgroup or does not support core network subgrouping, and subgroupsNumForUEID is not configured, the UE directly performs monitoring at a PO.

Related implementations of the PEI-based paging mode are described above, and the last paging mode is described below.

### Third type: WUS-based paging mode

In this implementation, introduction of a low-power wakeup signal (Wake Up Signal, WUS)/wakeup receiver (Wake Up Receiver, WUR) is further considered. That is, the WUS/WUR is introduced before a PO. For a terminal device that is not paged, a conventional paging receiving operation of performing PDCCH detection at a PO is replaced with detecting a WUS that is simpler, thereby reducing power consumption of paging receiving.

For the first conventional paging mode described above, because the terminal needs to monitor a P-RNTI at a PO, that is, decode a PDCCH, the terminal needs to wake up a main receiver before the PO. Therefore, to reduce power consumption of the terminal device, introduction of a receiver with lower power consumption, that is, an LR (Low power Receiver, low-power receiver) or a WUR, is considered. Such a receiver can receive a WUS (which may be only sequence-related, and does not require PDCCH decoding) that is simpler, and therefore, has lower power consumption.

Specifically, a digital main radio frequency interface corresponding to a main transceiver is mainly configured to perform interactive communication with a network device, obtain downlink data delivered by a core network device through the network device, receive a message with a complex structure sent by another network device, and send data and various other messages to the network device. However, it is configured to receive only some simple signals such as a WUS. Therefore, power consumption of the WUR is lower than power consumption of the MR.

It may be understood with reference to FIG. 5 that when the terminal device monitors paging, it only needs to start the LR (or WUR) before a PO, to perform WUS detection. If no WUS is detected, the terminal device may continue to sleep. If detecting a WUS, the terminal device further wakes up the MR, to monitor a paging message.

In the paging mode currently described, for example, the WUS may be combined with the PEI described above. Referring to FIG. 5, the terminal device may wake up the MR after detecting a WUS, and then, first receive PEI based on the MR before a PO. When the PEI indicates that the paging subgroup of the terminal device is paged, the terminal device then decodes a PDCCH by using a P-RNTI, and receives a paging message at a PDSCH resource indicated by the PDCCH.

Alternatively, the WUS mechanism may be used alone, and is not combined with the PEI mechanism. For example, referring to FIG. 5, the terminal device may further wake up the MR after detecting a WUS, then, directly decode a PDCCH based on the MR by using a P-RNTI, and after the decoding succeeds, receive a paging message at a PDSCH resource indicated by the PDCCH.

A specific relationship between the two mechanisms is not limited in this embodiment. However, in conclusion, power consumption of periodically monitoring paging by the terminal device can be effectively reduced based on either the PEI mechanism and the WUR mechanism.

A plurality of possible paging modes are described above. On the premise that there are a plurality of possible paging modes, because terminal devices in an idle state and an inactive state are invisible to a network device in a cell, if the network device sends a paging message by using one paging mode, but a terminal device receives a paging message by using another paging mode, a paging exception may be caused, or power consumption of the terminal device for monitoring the paging message is still high.

Therefore, a proper paging procedure needs to be designed, to enable both the terminal device and the network device to learn of which paging technology should be currently used for the terminal device. In addition, it may be determined based on the foregoing description that the terminal device moves, for example, the terminal device enters from a network device 1 to which the terminal device has established an RRC connection into coverage of another network device 2. When the terminal device moves into the coverage of the network device 2, if the terminal device does not establish an RRC connection to the network device 2, the terminal device is invisible to the network device 2.

Moreover, when the terminal device is paged, in addition to the network device 1 to which the terminal device has established an RRC connection, other network devices (for example, the network device 2) in a paging area also need to page the terminal device, to improve a possibility of finding the terminal device through paging.

Therefore, in addition to that the network device to which the terminal device has established an RRC connection needs to learn of which paging technology is used, the other network devices in the paging area also need to learn of which paging technology should be currently used for the terminal device, to ensure that the terminal device can be correctly found through paging. Currently, there is no clear solution or idea for implementation of determining a paging technology by a terminal device and a network device described above.

Therefore, this application provides the following technical concept: Paging configurations of a terminal device and a network device may be aligned in the two through signaling interaction, and then the terminal device and the network device respectively determine, based on a preset rule, a same paging mode based on the paging configurations aligned by the two, so that for a terminal device in an idle state and an inactive state, the terminal device and the network device perform a paging procedure by using a same paging mode, thereby avoiding the foregoing described problem of a paging exception or high power consumption.

Because the technical solutions of this application relate to a first network device and a second network device, the first network device and the second network device are first briefly described.

During actual implementation, a terminal device may move, for example, may move from coverage of a network device into coverage of another network device. In this application, a network device to which the terminal device has established an RRC connection before movement is referred to as a first network device, or the first network device may also be referred to as an anchor network device. In addition, in this application, a network device corresponding to network coverage in which the terminal device is located after the movement is referred to as a second network device, that is, the terminal device is located in coverage of the second network device after the movement.

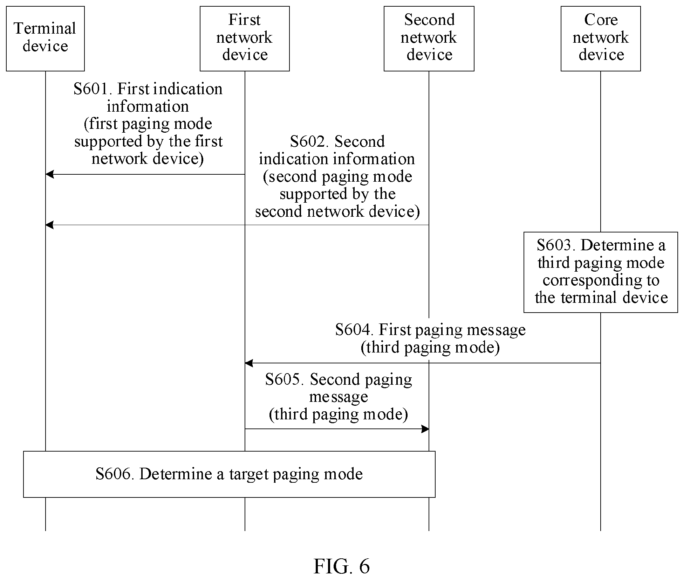

Based on the foregoing descriptions, a method for determining a paging mode provided in this application is first described below with reference to FIG. 6. FIG. 6 is a diagram 1 of signaling interaction of a method for determining a paging mode according to an embodiment of this application.

As shown in FIG. 6, the method includes the following steps.

S601. A first network device sends first indication information to a terminal device, where the first indication information indicates a first paging mode supported by the first network device.

The first network device may send the first indication information to the terminal device, to notify the terminal device of which paging modes the first network device currently supports. In this embodiment, the paging mode supported by the first network device is referred to as the first paging mode. The first paging mode supported by the first network device may include one or more paging modes.

Moreover, "supported by the first network device" in this embodiment may be understood from the following two aspects: One aspect is from the perspective of a capability of the first network device. A paging mode that can be supported by the first network device in terms of capability is referred to as the first paging mode. The other aspect is from the perspective of a preference of the first network device. A paging mode that the first network device wants to support (or wants to use) based on a current actual situation may be referred to as the first paging mode provided that a capability of the first network device allows. During actual implementation, how to specifically understand "support" may be determined based on an actual requirement.

For example, the first paging mode may include at least one of the following: a paging mode of parsing a PDCCH at a PO, a PEI-based paging mode, and a WUS-based paging mode. The three paging modes are described in detail in the foregoing embodiment, and details are not described herein again.

In an implementation, the first network device may send the first indication information to the terminal device in a broadcast manner. For example, the first network device may send the first indication information through system broadcast.

In addition, it may be understood that because the first indication information is sent in a broadcast manner, the second network device can also receive the first indication information sent by the first network device. Therefore, the second network device can also obtain the first paging mode supported by the first network device.

Moreover, for example, the first network device may send the first indication information only once in a broadcast manner after paging mode configuration is completed, and then, not repeatedly send the first indication information any more. This implementation can effectively reduce signaling overhead.

Alternatively, the first network device may periodically send the first indication information in a broadcast manner with preset duration as a cycle. Alternatively, the first network device may send the first indication information to the terminal device each time the terminal device accesses. For the two currently described sending occasions of the first indication information, it can be ensured that the terminal device can learn of the first paging mode of the first network device.

Moreover, when the first paging mode of the first network device is updated, the first network device may further send the first indication information in a broadcast manner again, to notify the terminal device and the second network device of the updated first paging mode of the first network device.

During actual implementation, a sending moment or a sending occasion at which the first network device sends the first indication information may be selected and set based on an actual requirement. This is not limited in this embodiment.

S602. The second network device sends second indication information to the terminal device, where the second indication information indicates a second paging mode supported by the second network device.

Similar to the foregoing first network device, the second network device may send the second indication information to the terminal device, to notify the terminal device of which paging modes the second network device currently supports. In this embodiment, the paging mode supported by the second network device is referred to as the second paging mode. The second paging mode supported by the second network device may include one or more paging modes.

For example, the second paging mode may include at least one of the following: a paging mode of parsing a PDCCH at a PO, a PEI-based paging mode, and a WUS-based paging mode. The three paging modes are described in detail in the foregoing embodiment, and details are not described herein again.

In addition, the concept of "supported by the second network device" in this embodiment is similar to the foregoing concept of "supported by the first network device", and details are not described herein again.

Similarly, the second network device may send the second indication information to the terminal device in a broadcast manner. Then, it may be understood that because the second indication information is sent in a broadcast manner, the first network device can also receive the second indication information sent by the second network device. Therefore, the first network device can also obtain the second paging mode supported by the second network device.

A sending occasion at which the second network device sends the second indication information is similar to the sending occasion of the first indication information described above, and details are not described herein again.

S603. A core network device determines a third paging mode corresponding to the terminal device.

In this embodiment, for the terminal device and the network device to implement paging message transmission by using a same paging mode, it needs to be ensured that the terminal device and the network device can learn of paging modes of the two.

Specifically, the terminal device learns of paging modes of the first network device and the second network device, which can be implemented through the foregoing steps S601 and S602. Moreover, the first network device and the second network device further need to learn of a paging mode of the terminal device.

For either of the first network device and the second network device, in an implementation, the terminal device may notify, through signaling interaction, a network device of a paging mode supported by the terminal device. However, after an RRC connection between the terminal device and the network device is released, the network device usually no longer stores the paging mode notified by the terminal device. Therefore, it is unstable that the terminal device simply notifies the network device of the paging mode.

Therefore, in this embodiment, the core network device determines a third paging mode corresponding to the terminal device, and the third paging mode corresponding to the terminal device can be stably stored in the core network device. Later, when the core network device needs to page the terminal device, the core network device can notify a network device of the third paging mode corresponding to the terminal device, so that the network device can learn of the third paging mode of the terminal device.

In an implementation, the third paging mode in this embodiment may be a paging mode that is reported by the terminal device and that is supported by the terminal device. Alternatively, the third paging mode in this embodiment may be a paging mode that is negotiated by the terminal device and the core network device and that can be used by the terminal device.

Similarly, the third paging mode corresponding to the terminal device may also include one or more paging modes. For example, the first paging mode may include at least one of the following: a paging mode of parsing a PDCCH at a PO, a PEI-based paging mode, and a WUS-based paging mode. The three paging modes are described in detail in the foregoing embodiment, and details are not described herein again.

It should be noted that a sequence of performing S601 to S603 is not limited in this embodiment. For example, S601, S602, and S602 may be sequentially performed. Alternatively, S602 is first performed, then, S601 is performed, and finally, S603 is performed; and so on. A possible implementation of an execution sequence of the three steps is not enumerated herein any more, and a specific execution sequence of the three steps S601 to S603 may be selected based on an actual requirement.

S604. The core network device sends a first paging message to the first network device, where the first paging message includes the third paging mode corresponding to the terminal device.

Further, when the core network device needs to page the terminal device, the core network device may send the first paging message to the first network device. The first paging message is for paging the terminal device. In this embodiment, the first paging message may further include the third paging mode corresponding to the terminal device, to notify the first network device of the third paging mode corresponding to the terminal device.

The adding the third paging mode corresponding to the terminal device into the first paging message described herein is an implementation. In another implementation, when the core network device needs to page the terminal device, the core network device may send the first paging message to the first network device. In addition, the core network device may further send additional notification information to the first network device, where the notification information indicates the third paging mode corresponding to the terminal device. In this implementation, the notification information and the first paging message may be two messages independent of each other.

S605. The first network device sends a second paging message to the second network device, where the second paging message includes the third paging mode corresponding to the terminal device.

After the first network device receives the first paging message sent by the core network device, the first network device can learn of the third paging mode of the terminal device through the first paging message. However, because the terminal device may move, in addition to that the first network device needs to send a paging message to the terminal device, the second network device also needs to send a paging message to the terminal device, to ensure that the terminal device can be paged.

Therefore, both the first network device and the second network device need to determine the third paging mode of the terminal device. In an implementation, after learning of the third paging mode of the terminal device, the first network device may further send a second paging message to the second network device. The second paging message includes the third paging mode corresponding to the terminal device, so that the second network device can also learn of the third paging mode of the terminal device.

The first paging message and the second paging message may be the same. To be specific, after receiving the first paging message, the first network device directly forwards the first paging message to the second network device. In this embodiment, the paging message sent to the second network device is simply referred to as the second paging message.

Alternatively, the first paging message and the second paging message may be different. To be specific, after receiving the first paging message, the first network device may perform processing based on the first paging message, to obtain a second paging message, and then send the second paging message to the second network device.

The foregoing described implementation is that the first network device sends the second paging message to the second network device, so that the second network device determines the third paging mode of the terminal device.

In another implementation, the first network device and the second network device are both network devices in the paging area. For example, the core network device may send a paging message to all network devices in the paging area. That is, for example, the core network device may also send the first paging message to the second network device. The related implementation of sending the first paging message to the second network device by the core network device is similar to the implementation of sending the first paging message to the first network device by the core network device, and details are not described herein again.

Based on this implementation, the second network device can also learn of the third paging mode of the terminal device. Therefore, step S605 in this embodiment is optional.

When step S605 is performed, the second network device may be enabled, through notifying by the first network device, to learn of the third paging mode of the terminal device. In addition, step S606 and the step in which the core network device sends the first paging message to the second network device may also be performed at the same time, to ensure that the second network device can learn of the third paging mode of the terminal device.

Alternatively, when step S605 is not performed, the second network device may be enabled, in the foregoing described manner in which the core network device sends the first paging message to the second network device, to learn of the third paging mode of the terminal device.

During actual implementation, which policy that is specifically used to enable the second network device to learn of the third paging mode of the terminal device may be selected and set based on an actual requirement. This is not specifically limited in this embodiment.

S605. The terminal device, the first network device, and the second network device all determine a target paging mode.

For the terminal device, the terminal device can learn of, based on the first indication information sent by the first network device, the first paging mode supported by the first network device. In addition, the terminal device can learn of, based on the second indication information sent by the second network device, the second paging mode supported by the second network device. In addition, the terminal device can determine the third paging mode corresponding to the terminal device. Specifically, regardless of whether the terminal device reports a paging mode supported by the terminal device, or the terminal device and the core network device negotiate a paging mode to be used by the terminal device, the terminal device can determine the third paging mode corresponding thereto.

Therefore, the terminal device can determine the target paging mode based on the first paging mode, the second paging mode, and the third paging party.

For the first network device, the first network device can determine, based on the second indication information sent by the second network device in a broadcast manner, the second paging mode supported by the second network device. In addition, the first network device can learn of, based on the first paging message sent by the core network device, the third paging mode corresponding to the terminal device. In addition, the first network device can determine the first paging mode supported by the first network device.

For the second network device, the second network device can determine, based on the first indication information sent by the first network device in a broadcast manner, the first paging mode supported by the first network device. In addition, the second network device can learn of, based on the second paging message sent by the first network device, the third paging mode corresponding to the terminal device. In addition, the second network device can determine the second paging mode supported by the second network device.

Therefore, in this embodiment, the terminal device, the first network device, and the second network device can align the first paging mode, the second paging mode, and the third paging mode with each other, and then the terminal device, the first network device, and the second network device can separately determine the target paging mode based on the first paging mode, the second paging mode, and the third paging mode.

For example, the terminal device can determine the target paging mode in the first paging mode, the second paging mode, and the third paging mode according to a preset rule, and then receive, based on the target paging mode, a paging message sent by the first network device or the second network device.

In addition, the first network device can determine the target paging mode in the first paging mode, the second paging party, and the third paging mode according to the same preset rule, and then send a paging message to the terminal device based on the target paging mode. It is also similar for the second network device.

Because the terminal device, the first network device, and the second network device align the first paging mode, the second paging mode, and the third paging mode with each other, and also determine the target paging mode according to the same preset rule, it can be ensured that the terminal device and the network devices determine the same target paging mode. Then, the network devices and the terminal device implement transmission of a paging message based on the same target paging mode, so that the terminal device can correctly receive paging, and when the target paging mode has an effect of reducing power consumption, it can also be ensured that the effect of reducing power consumption can be normally exerted.

Based on the description in the foregoing embodiment, it can be determined that there are two different implementations for the core network device to determine the third paging mode corresponding to the terminal device. Specific steps of the two implementations are separately further described below.

One implementation is that the terminal device can directly report a paging mode supported by the terminal device. Correspondingly, the third paging mode is a paging mode supported by the terminal device.

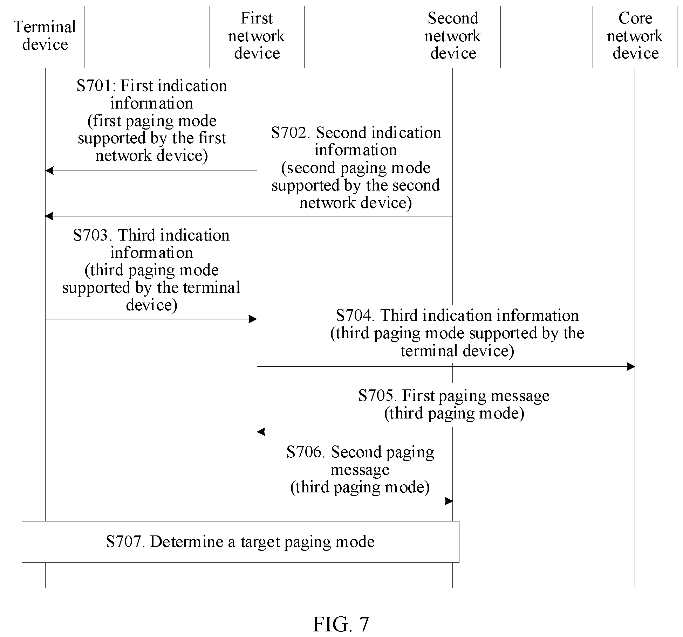

Description is provided below with reference to FIG. 7. FIG. 7 is a diagram 2 of signaling interaction of a method for determining a paging mode according to an embodiment of this application.

As shown in FIG. 7, the method includes the following steps.

S701. A first network device sends first indication information to a terminal device, where the first indication information indicates a first paging mode supported by the first network device.

S702. The second network device sends second indication information to the terminal device, where the second indication information indicates a second paging mode supported by the second network device.

Implementations of S701 and S702 are the same as the implementations of S601 and S602 described above, and details are not described herein again.

S703. The terminal device sends third indication information to the first network device, where the third indication information indicates a third paging mode supported by the terminal device.

Further, "the core network device determines a third paging mode corresponding to a terminal device" described in the foregoing embodiment may be implemented through steps S703 and S704 in the current embodiment.

In this embodiment, the terminal device may send the third indication information to the first network device. A purpose of the third indication information is to notify, of the third paging mode supported by the terminal device, a device that receives the third indication information. That is, the terminal device reports, through the third indication information, the third paging mode supported by the terminal device.

Moreover, "supported by the terminal device" in this embodiment may be understood from the following two aspects: One aspect is from the perspective of a capability of the terminal device. A paging mode that can be supported by the terminal device in terms of capability is referred to as the third paging mode. The other aspect is from the perspective of a preference of the terminal device. A paging mode that the terminal device wants to support (or wants to use) based on a current actual situation may be referred to as the third paging mode provided that a capability of the terminal device allows. During actual implementation, how to specifically understand "support" may be determined based on an actual requirement.

It may be understood that the terminal device can report related uplink data to the first network device only when the terminal device establishes an RRC connection to the first network device. Therefore, the terminal device may send the third indication information to the first network device when the terminal device is in an RRC connected state.

In an implementation, for example, the terminal device may send the third indication information to the first network device when establishing an RRC connection to the first network device for the first time, and then, no longer repeatedly send the third indication information. Until the third paging mode supported by the terminal device is updated, the terminal device in the RRC connected state sends the third indication information to the first network device. This implementation can reduce signaling overhead.

Alternatively, the terminal device may send the third indication information to the first network device each time the terminal device establishes an RRC connection to the first network device. This implementation can ensure that the third paging mode of the terminal device can be effectively reported to the first network device.

Alternatively, the terminal device may send the third indication information to the first network device in response to a requirement of the first network device. A trigger occasion of sending the third indication information by the terminal device is not specifically limited in this embodiment.

S704. The first network device sends the third indication information to the core network device, where the third indication information indicates the third paging mode supported by the terminal device.

After receiving the third indication information, the first network device may further send the third indication information to the core network device. Similarly, the third indication information is used for the third paging mode supported by the terminal device, to notify the core network device of the third paging mode supported by the terminal device.

After receiving the third indication information sent by the terminal device, the first network device may perform, on the second indication information, related processing that the first network device should perform. Then, the processed third indication information is further sent to the core network device. In such an implementation, the terminal device interacts with the first network device, and then the first network device interacts with the core network device. Correspondingly, signaling used by the terminal device for sending the third indication information is AS signaling.

Alternatively, the first network device may perform no processing on the third indication information after receiving the third indication information sent by the terminal device, and the first network device is only responsible for forwarding the third indication information to the core network device. In such an implementation, it may be understood that the terminal device directly interacts with the core network device, to notify the core network device of the third paging mode supported by the terminal device. Correspondingly, signaling used by the terminal device for sending the third indication information is NAS signaling.

A specific interaction manner of the terminal device is not limited in this embodiment provided that the core network device can be notified of the third paging mode supported by the terminal device.

Implementations of S705 to S707 in FIG. 7 are the same as the implementations of S604 to S606 described above, and details are not described herein again.

In this embodiment, the terminal device sends the third indication information to the first network device, and then the first network device sends the third indication information to the core network device, so that the core network device can be effectively notified, through the third indication information, of the third paging mode supported by the terminal device.

In addition, in another implementation, the terminal device notifies the core network device of a paging mode supported by the terminal device, and then the core network device and the terminal device negotiate, based on the paging mode supported by the terminal device, a paging mode used by the terminal device. In this embodiment, the paging mode supported by the terminal device is referred to as a fourth paging mode, and the paging mode negotiated by the terminal device and the core network device is referred to as a third paging mode.

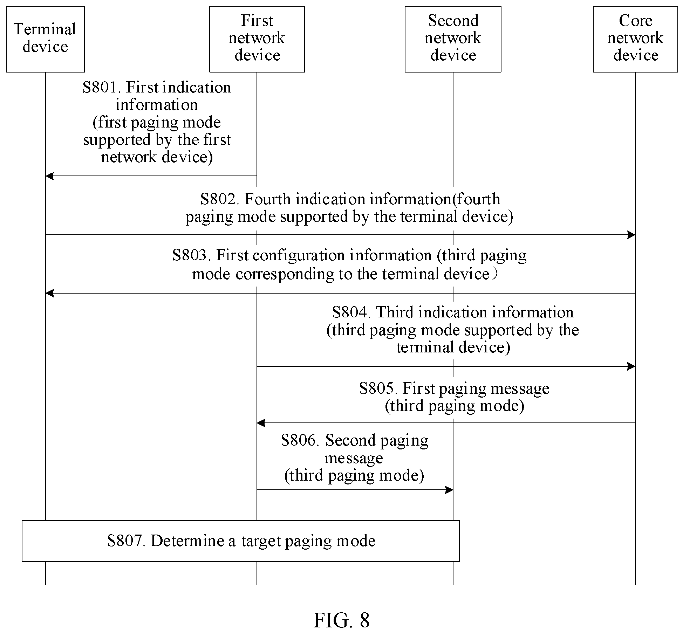

Description is provided below with reference to FIG. 8. FIG. 8 is a diagram 3 of signaling interaction of a method for determining a paging mode according to an embodiment of this application.

As shown in FIG. 8, the method includes the following steps.

S801. A first network device sends first indication information to a terminal device, where the first indication information indicates a first paging mode supported by the first network device.

S802. The second network device sends second indication information to the terminal device, where the second indication information indicates a second paging mode supported by the second network device.

Implementations of S801 and S802 are the same as the implementations of S601 and S602 described above, and details are not described herein again.

S803. The terminal device sends fourth indication information to a core network device, where the fourth indication information indicates a fourth paging mode supported by the terminal device.

Further, "the core network device determines a third paging mode corresponding to a terminal device" described in the foregoing embodiment may be implemented through steps S803 and S804 in the current embodiment.

In this embodiment, the terminal device may send the fourth indication information to the core network device. A purpose of the fourth indication information is to notify the core network device of the fourth paging mode supported by the core network device. The fourth indication information herein is similar to the second indication information described in the foregoing embodiment. Therefore, details of the fourth indication information are not described in this embodiment again.

However, it should be noted that in this embodiment, that the terminal device sends the fourth indication information is to directly interact with the core network device, to notify the core network device of the fourth paging mode supported by the terminal device. Therefore, signaling used by the terminal device for sending the fourth indication information is NAS signaling.

Further, in addition to indicating the fourth paging mode, the fourth indication information, for example, may further indicate a preferred selection of the terminal device. For example, the terminal device supports a plurality of fourth paging modes. If the terminal device prefers to use one or more of the plurality of paging modes to receive a paging message, the preference of the terminal device may be indicated by the fourth indication information.

S804. The core network device sends first configuration information to the terminal device, where the first configuration information indicates a third paging mode corresponding to the terminal device.

After receiving the fourth indication information sent by the terminal device, the core network device may determine the fourth paging mode supported by the terminal device. Further, when the fourth indication information indicates the preferred selection of the terminal device, the core network device, for example, may further determine a paging mode that the terminal device prefers to select in the fourth paging mode.

Then, for example, the core network device may determine, in the fourth paging modes supported by the terminal device, the third paging mode that the terminal device is allowed to use or specify the third paging mode that the terminal device uses, which is correspondingly the third paging mode corresponding to the terminal device in this embodiment.

In an implementation, after the core network device learns of the fourth paging mode supported by the terminal device, if it is determined that the terminal device is allowed to use each of the fourth paging mode, the core network device may send first configuration information to the terminal device. For example, the first configuration information may be confirmation information, where the confirmation information indicates confirmation of the fourth paging mode. That is, the core network device may directly determine the fourth paging mode supported by the terminal device as the third paging mode, and notify, through the first configuration information (for example, confirmation information), the terminal device that each of the fourth paging mode supported by the terminal device is used as the negotiated third paging mode.

In another implementation, the core network device may not only learn of the fourth paging mode supported by the terminal device, but also learn of the preferred selection of the terminal device. If the core network device determines that the terminal device is allowed to use each of the at least one paging mode that the terminal device prefers to select, the core network device may send the first configuration information to the terminal device. For example, the first configuration information may be confirmation information, where the confirmation information indicates confirmation of the at least one paging mode that the terminal device prefers to select. That is, the core network device determines, as the third paging mode, the at least one paging mode that the terminal device prefers to select, and notify, through the first configuration information (for example, confirmation information), the terminal device that the at least one paging mode that the terminal device prefers to select is used as the negotiated third paging mode.

In another implementation, when the core network device learns of the third paging mode supported by the terminal device, and may also learn of the preferred selection of the terminal device, by referring to the data, the core network device may select, from the fourth paging mode supported by the terminal device, at least one paging mode that the terminal device is allowed (or instructed) to use, and then use, as the negotiated third paging mode, the at least one paging mode selected from the fourth paging mode. In addition, the core network device may indicate the third paging mode through the first configuration information, so that the core network and the terminal device negotiate the third paging mode.

Implementations of S805 to S807 in FIG. 8 are the same as the implementations of S604 to S606 described above, and details are not described herein again.

In this embodiment, the terminal device sends the fourth indication information to the core network device, and then the core network device selects, based on the fourth indication information reported by the terminal device, at least one paging mode from the fourth paging mode supported by the terminal device, uses the selected paging mode as the third paging mode negotiated by the terminal device and the core network, and then notifies the terminal device through the first configuration information, so that the terminal device and the core network device negotiate the third paging mode.

In addition, in the current embodiment, because the paging subgroup of the PEI described above is determined by the core network device, the terminal device directly interacts with the core network device, so that the core network device determines the third paging information corresponding to the terminal device, which brings some advantages to cooperative use of the WUS and PEI, for example, reduction of signaling overhead and/or lowering of implementation difficulty.

Based on the various cases described in the foregoing embodiments, the first indication information sent by the network device is further described below.

The first indication information indicates the first paging mode supported by the network device. There may be, for example, the following two implementations for the first indication information to indicate the first paging mode:
1. The first indication information includes the first paging mode.

In this implementation, the first indication information directly indicates the first paging mode. For example, the first indication information may include identification information of the first paging mode, to directly indicate the first paging mode.

Identification information of paging modes, for example, may be pre-negotiated, or may be dynamically configured. This is not limited in this embodiment.

2. The first indication information is paging configuration information.

To implement successful transmission of a paging message, the network device usually further needs to send paging configuration information to the terminal device. The paging configuration information, for example, indicates a configuration, such as a time-frequency resource and a scrambling mode, of a paging-related downlink message (for example, PEI or a WUS), so that the terminal device can successfully receive the paging message only after determining the configuration of the paging-related downlink message. A specific configuration included in the paging configuration message may be selected based on an actual requirement. This is not limited in this embodiment.

Based on this, because the paging configuration message indicates a configuration of a paging-related downlink message, when the network device sends paging configuration messages of some downlink messages to the terminal device, it may be implicitly indicated that the network device supports paging modes corresponding to the downlink messages. Therefore, in the current implementation, the paging configuration information may be used as the first indication information.

When the network device supports a plurality of paging modes, the network device may send a plurality of pieces of paging configuration information to the terminal device. Therefore, the first indication information may include at least one piece of paging configuration information.

If the first indication information includes paging configuration information of a WUS, that is, the network device sends the paging configuration information of the WUR to the terminal device, correspondingly, it is implicitly indicated that the network device supports the WUS-based paging mode. Therefore, it may be determined that the first paging mode includes the WUS-based paging mode.

Moreover, if the first indication information includes paging configuration information of PEI, that is, the network device sends the paging configuration information of the PEI to the terminal device, correspondingly, it is implicitly indicated that the network device supports the PEI-based paging mode. Therefore, it may be determined that the first paging mode includes the PEI-based paging mode.

The first indication information may include both the paging configuration information of the WUS and the paging configuration information of the PEI. Therefore, the first paging mode may include, for example, both the WUS-based paging mode and the PEI-based paging mode.

For implementation of indirectly indicating the first paging mode through the paging configuration information, whether the first paging mode includes the paging mode of "decoding a PDCCH at a PO according to a cycle" may include the following implementations.

In an implementation, it may be pre-configured that the network device supports, by default, the paging mode of decoding a PDCCH at a PO according to a cycle. That is, the first paging mode constantly includes the paging mode of decoding a PDCCH at a PO according to a cycle.

In another implementation, if the terminal device receives neither the paging configuration information of the PEI sent by the network device, nor the paging configuration information of the WUS sent by the network device, the terminal device may determine that the network device supports the paging mode of decoding a PDCCH at a PO according to a cycle. That is, only in this case, the first paging mode includes the paging mode of decoding a PDCCH at a PO according to a cycle.

Still alternatively, one piece of particular downlink information may be determined for the paging mode of "decoding a PDCCH at a PO according to a cycle". When the first indication information includes paging configuration information of the particular downlink information, that is, when the network device sends the paging configuration message of the particular downlink information to the terminal device, it is correspondingly implicitly indicated that the network device supports the paging mode of decoding a PDCCH at a PO according to a cycle.

In this embodiment, the first indication information can quickly and accurately indicate the first paging mode in a direct indication manner. Alternatively, the paging configuration information may be determined as the first indication information, to indicate the first paging mode in an indirect indication manner. In addition, in this implementation, the paging configuration information sent by the network device may be reused to indicate the first paging mode, thereby effectively reducing signaling overhead.

The foregoing embodiment describes an implementation in which the first indication information indicates the first paging mode. Actually, an implementation in which the second indication information indicates the second paging mode is also similar, and details are not described herein again.

An implementation of the third indication information in this application is briefly described below.

The third indication information indicates the third paging mode supported by the terminal device. There may be, for example, the following two implementations for the third indication information to indicate the third paging mode:
1. The third indication information includes the third paging mode.

In this implementation, the third indication information directly indicates the third paging mode. For example, the third indication information may include identification information of the third paging mode, to directly indicate the third paging mode.

Identification information of paging modes, for example, may be pre-negotiated, or may be dynamically configured. This is not limited in this embodiment.

2. The third indication information includes a receiver type.

For the plurality of paging modes described above, it may be understood that receivers correspondingly used for different paging modes may be different to some extent. Therefore, a correspondence between the receivers and the paging modes can be determined. In this way, the receiver type may be included in the third indication information, to indicate the third paging mode. The receiver type in this embodiment may include at least one of the following: a low-power receiver (LR) and a main receiver (MR).

In an implementation, if the receiver type in the third indication information includes only the low-power receiver, because the low-power receiver needs to be used when a WUS is received, it may be determined that the third paging mode includes the WUS-based paging mode.

Alternatively, if the third indication information includes only the main receiver, because the main receiver needs to be used for receiving PEI and receiving a PDCCH in a cycle of a PO, it may be determined that the third paging mode includes: the PEI-based paging mode and the paging mode of decoding a PDCCH at a PO according to a cycle.

Alternatively, if the receiver type in the third indication information includes both the low-power receiver and the main receiver, with reference to the two cases described above, it may be determined that the third paging mode includes: the WUS-based paging mode, the PEI-based paging mode, and the paging mode of decoding a PDCCH at a PO according to a cycle.

3. The third indication information includes a parameter associated with a paging mode.

Similar to the embodiments described above, to implement successful transmission of a paging message, the terminal device usually needs to report a paging-related parameter to the network device. Based on this, some parameters that the terminal device needs to report are associated with particular paging modes. Therefore, when the terminal device device sends some parameters to the network device, it is implicitly indicated that the terminal device supports paging modes corresponding to the parameters. Therefore, in the current implementation, a parameter associated with a paging mode may be used as the first indication information.

In this embodiment, a parameter associated with a paging mode may be collectively referred to as the first parameter. When the terminal device supports a plurality of paging modes, the terminal device can send a plurality of first parameters to the network device. Therefore, the third indication information may include at least one first parameter.

For example, the first parameter, an MR wakeup time, is associated with the WUS-based paging mode. If the third indication information includes the MR wakeup time, that is, the terminal device sends the MR wakeup time to the network device, correspondingly, it is implicitly indicated that the terminal device device supports the WUS-based paging mode. Therefore, it may be determined that the third paging mode includes the WUS-based paging mode.

In this embodiment, the third indication information can quickly and accurately indicate the third paging mode in a direct indication manner. Alternatively, the receiver type may be further included in the third indication information, to indicate the third paging mode in an indirect indication manner. Alternatively, the first parameter sent by the terminal device may be determined as the third indication information, to indicate the third paging mode in an indirect indication manner. In addition, in this implementation, the first parameter sent by the terminal device may be reused to indicate the third paging mode, thereby effectively reducing signaling overhead.

Further, when sending the third indication information, the terminal device may, for example, send the third indication information through UE capability information (UE capability information). Alternatively, the terminal device may send the third indication information through any other possible signaling. This is not specifically limited in this embodiment.

Moreover, based on the foregoing embodiment, the paging mode of "decoding a PDCCH at a PO according to a cycle" further needs to be additionally described.

Because the paging mode of "decoding a PDCCH at a PO according to a cycle" is a conventional paging mode, for example, the network device (or the terminal device) may be set to support this paging mode by default. Therefore, this paging mode may not be additionally indicated in the first indication information (or the second indication information or the third indication information). The network device may also determine that the terminal device supports this paging mode. Correspondingly, the terminal device may also determine that the network device supports this paging mode. Based on this implementation, signaling overhead can be effectively reduced.

Alternatively, the default configuration described above may not be set, and therefore, whether the network device (or the terminal device) can use the paging mode may be indicated in the first indication information (or the second indication information or the third indication information). Based on this implementation, whether the network device (or the terminal device) supports the conventional paging mode can be flexibly configured.

An indication manner of the conventional paging mode is not specifically limited in this embodiment, and may be selected based on an actual requirement.

The related implementation of indicating the third paging mode by the third indication information is described above. Actually, the foregoing described implementations of indicating the fourth paging mode by the fourth indication information and indicating the third paging mode by the first configuration information when the core network specifies the terminal device to use some paging modes are also similar to the implementation of the third indication information. Therefore, the implementations of the fourth indication information and the first configuration information are not described in detail again in this application, and reference may be made to content described in the foregoing embodiments.

Based on the content described above, implementations of determining the target paging mode by the terminal device, the first network device, and the second network device are separately described below.

First part: Implementation of determining the target paging mode by the first network device

In an implementation, the target paging mode may be determined based on a priority of a paging mode.

Specifically, the first network device may determine, as the target paging mode, a paging mode with a highest priority in at least one paging mode that exists in both the first paging mode and the third paging mode.

Existence in both the first paging mode and the third paging mode can ensure that the selected paging mode is supported by both the first network device and the terminal device. In addition, because priorities of paging modes are usually set due to some considerations, based on such a rule, on the premise that support from both parties is ensured, an optimal paging mode may be determined as the target paging mode out of some considerations, to improve a paging effect to some extent.

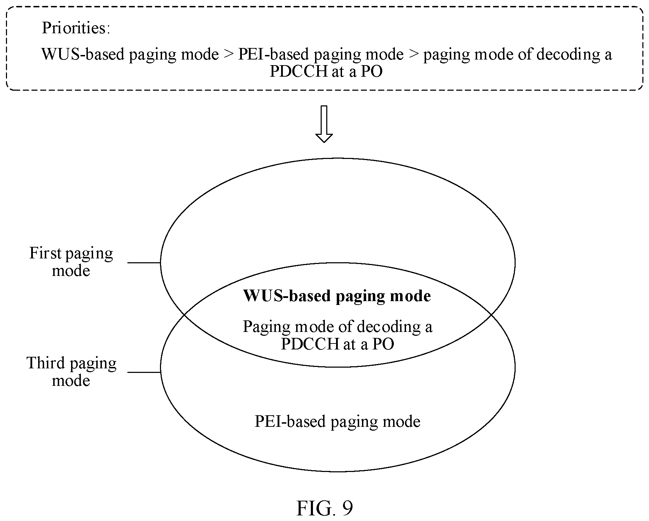

In an implementation, priorities of a plurality of paging modes may be understood with reference to FIG. 9. FIG. 9 is a schematic diagram 1 of implementation of determining a target paging mode according to an embodiment of this application.

As shown in FIG. 9, the priorities of the plurality of paging modes may be: priority of a WUS-based paging mode > priority of a PEI-based paging mode > priority of a paging mode of decoding a PDCCH at a PO according to a cycle.

In addition, referring to FIG. 9, it is assumed that the first paging mode includes the WUS-based paging mode and the paging mode of decoding a PDCCH at a PO according to a cycle. That is, the network device supports the two paging modes.

Moreover, it is assumed that the third paging mode includes: the WUS-based paging mode, the PEI-based paging mode, and the paging mode of decoding a PDCCH at a PO according to a cycle. That is, the terminal device can use the three paging modes.

In this case, as shown in FIG. 9, it may be determined that the "WUS-based paging mode" and the "paging mode of decoding a PDCCH at a PO according to a cycle" are paging modes that exist in both the first paging mode and the third paging mode, and a paging mode with a highest priority in the two paging modes is the "WUS-based paging mode". Therefore, it can be determined that the target paging mode is the "WUS-based paging mode".

The priorities of the paging modes illustrated in FIG. 9 are merely a possible implementation. During actual implementation, the priorities of the paging modes may be selected and set based on an actual requirement, and are not limited in this embodiment. For example, the priorities of the plurality of paging modes may further be any one of the following:
priority of the WUS-based paging mode > priority of the paging mode of decoding a PDCCH at a PO according to a cycle > priority of the PEI-based paging mode;
priority of the paging mode of decoding a PDCCH at a PO according to a cycle > priority of the WUS-based paging mode > priority of the PEI-based paging mode;
priority of the PEI-based paging mode > priority of the WUS-based paging mode > priority of the paging mode of decoding a PDCCH at a PO according to a cycle;
priority of the PEI-based paging mode > priority of the paging mode of decoding a PDCCH at a PO according to a cycle > priority of the WUS-based paging mode; and
priority of the paging mode of decoding a PDCCH at a PO according to a cycle > priority of the PEI-based paging mode > priority of the WUS-based paging mode.

A configuration manner of the priorities is further briefly described herein.

In an implementation, the priorities of the paging modes may be, for example, preset. In this implementation, the terminal device and the network device synchronize the preset priorities of the paging modes, to ensure that the priorities of the two parties are aligned.

Alternatively, for example, the priorities of the paging modes may be dynamically configured to the terminal device after being determined by the network device. For example, the network device may send second configuration information to the terminal device. The second configuration information indicates the priorities of the paging modes.

Further, regardless of the foregoing described preset priorities or dynamically configured priorities, the priorities are usually relatively fixed after configuration is completed. However, based on this, there is still a case in which fixed priorities need to be changed. This case is described below.

In a possible implementation, in addition to notifying, through the first indication information described above, the terminal device of the first paging mode supported by the terminal device, the first network device may further send fifth indication information to the terminal device via unicast signaling. The fifth indication information is a fifth paging mode that the first network device instructs the terminal device to use for receiving a paging message. For example, the unicast signaling may be an RRC release (release) message through which the first network device transfers the terminal device to an inactive state.

That is, the first network device may specify, to the terminal device via unicast signaling, that the terminal device needs to receive the paging message by using the fifth paging mode. When the first network device initiates a targeted indication to the terminal device via unicast signaling, an actual situation of the terminal device, an actual situation of the network device, an actual situation of a link, and the like are usually considered for choosing to enable the terminal device to receive the paging message by using the fifth paging mode.

Because out of some considerations, the network device specially instructs, via unicast signaling, the terminal device to receive the paging message by using the fifth paging mode, the network device may set the priority of the fifth paging mode to be the highest. That is, when fifth indication information sent via unicast signaling exists, the priorities of the paging modes need to be updated, and the fifth paging mode is determined as a paging mode with a highest priority.

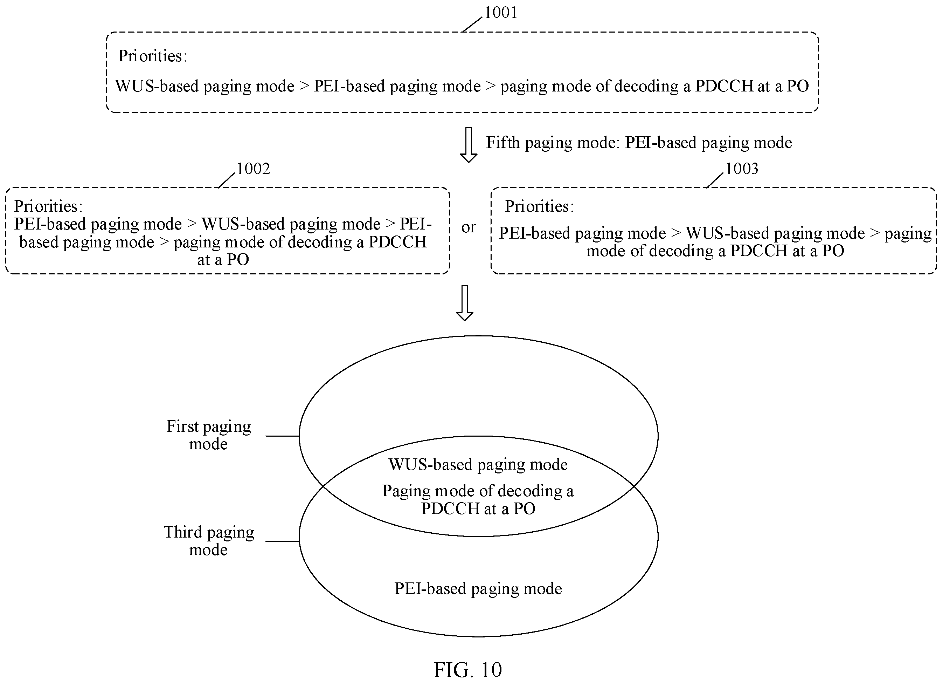

For example, reference may be made to FIG. 10 for understanding. FIG. 10 is a schematic diagram 2 of implementation of determining a target paging mode according to an embodiment of this application.

For example, it is assumed that the preset or dynamically configured priorities are in a case shown in 1001 in FIG. 10. That is, the priorities of the plurality of paging modes may be: priority of a WUS-based paging mode > priority of a PEI-based paging mode > priority of a paging mode of decoding a PDCCH at a PO according to a cycle.

In addition, assuming that the fifth paging mode sent by the first network device via unicast signaling currently exists, the fifth paging mode may be determined as the paging mode with a highest priority. That the fifth paging mode is determined as the paging mode with a highest priority has the following two implementations:

In an implementation, the fifth paging mode may be determined as the paging mode with a highest priority in a form of adding a priority of the fifth paging mode based on original priorities. For example, referring to 1002, a priority of "the PEI-based paging mode" may be added based on the original priorities: "priority of a WUS-based paging mode > priority of a PEI-based paging mode > priority of a paging mode of decoding a PDCCH at a PO according to a cycle", to obtain the priorities shown in 1002: the PEI-based paging mode > priority of the WUS-based paging mode > priority of the PEI-based paging mode > priority of the paging mode of decoding a PDCCH at a PO according to a cycle.

Still referring to the example of FIG. 10, it may be determined that the "WUS-based paging mode" and the "paging mode of decoding a PDCCH at a PO according to a cycle" are paging modes that exist in both the first paging mode and the third paging mode. In addition, for the updated paging modes shown in 1002, a paging mode with a highest priority in the two paging modes is the "WUS-based paging mode". Therefore, it can be determined that the target paging mode is the "WUS-based paging mode".

In another implementation, the fifth paging mode may be determined as the paging mode with a highest priority in a form of moving a priority of the fifth paging mode based on original priorities. For example, referring to 1003, a priority of "the PEI-based paging mode" may be moved based on the original priorities: "priority of a WUS-based paging mode > priority of a PEI-based paging mode > priority of a paging mode of decoding a PDCCH at a PO according to a cycle", and determined as the paging mode with a highest priority, to obtain the priorities shown in 1003: PEI-based paging mode > priority of the WUS-based paging mode > priority of the PEI-based paging mode > priority of the paging mode of decoding a PDCCH at a PO according to a cycle.

Still referring to the example of FIG. 10, it may be determined that the "WUS-based paging mode" and the "paging mode of decoding a PDCCH at a PO according to a cycle" are paging modes that exist in both the first paging mode and the third paging mode. In addition, for the updated paging modes shown in 1002, a paging mode with a highest priority in the two paging modes is the "paging mode of decoding a PDCCH at a PO according to a cycle". Therefore, it can be determined that the target paging mode is the "paging mode of decoding a PDCCH at a PO according to a cycle".

By comparing the two priority updating manners described above, it can be determined that in the first manner (that is, the implementation in an adding form), when the terminal device and the first network device do not both support the fifth paging mode, a paging mode with a higher priority in the original priorities may still be determined as the target paging mode to improve a paging effect.

Second part: Implementation of determining the target paging mode by the second network device

In an implementation, the target paging mode may be determined based on a priority of a paging mode.

Specifically, the second network device may determine, as the target paging mode, a paging mode with a highest priority in at least one paging mode that exists in both the second paging mode and the third paging mode.

Existence in both the second paging mode and the third paging mode can ensure that the selected paging mode is supported by both the second network device and the terminal device. In addition, because priorities of paging modes are usually set due to some considerations, based on such a rule, on the premise that support from both parties is ensured, an optimal paging mode may be determined as the target paging mode out of some considerations, to improve a paging effect to some extent.

The related implementation of the priorities of the paging modes and the implementation of determining, by the second network device, the target paging mode based on the priorities of the paging modes are similar to the implementations of the first network device described above. A difference lies in that the first paging mode of the first network device is replaced with the second paging mode of the second network device. Details are not described herein again.

Third part: Implementation of determining the target paging mode by the terminal device

In the technical solutions of this application, the terminal device involves movement. Therefore, when the terminal device determines the target paging mode, the following two cases need to be distinguished. In the first case, the terminal device is located in coverage of the first network device, and in the other case, the terminal device is located in coverage of the second network device. Implementations of determining the target paging mode in the two cases are separately described below.

Case 1: The terminal device is located in coverage of the first network device.

Similar to the foregoing descriptions, the terminal device may also determine the target paging mode based on the priorities of the paging modes.

Specifically, the terminal device may determine, as the target paging mode, a paging mode with a highest priority in at least one paging mode that exists in both the first paging mode and the third paging mode.

Existence in both the first paging mode and the third paging mode can ensure that the selected paging mode is supported by both the first network device and the terminal device. In addition, because priorities of paging modes are usually set due to some considerations, based on such a rule, on the premise that support from both parties is ensured, an optimal paging mode may be determined as the target paging mode out of some considerations, to improve a paging effect to some extent.

The related implementation of the priorities of the paging modes and the implementation of determining, by the terminal device, the target paging mode based on the priorities of the paging modes are similar to the implementations of the first network device described above. Details are not described herein again.

Case 2: The terminal device is located in coverage of the second network device.

Similar to the foregoing descriptions, the terminal device may also determine the target paging mode based on the priorities of the paging modes.

Specifically, the terminal device may determine, as the target paging mode, a paging mode with a highest priority in at least one paging mode that exists in both the second paging mode and the third paging mode.

Existence in both the second paging mode and the third paging mode can ensure that the selected paging mode is supported by both the second network device and the terminal device. In addition, because priorities of paging modes are usually set due to some considerations, based on such a rule, on the premise that support from both parties is ensured, an optimal paging mode may be determined as the target paging mode out of some considerations, to improve a paging effect to some extent.

The related implementation of the priorities of the paging modes and the implementation of determining, by the terminal device, the target paging mode based on the priorities of the paging modes are similar to the implementations of the second network device described above. Details are not described herein again.

Based on the foregoing described three parts of determining the target paging mode, it should be additionally noted that the first paging mode supported by the first network device and the second paging mode supported by the second network device may be different. Therefore, when the target paging mode is determined based on the foregoing described implementation, the target paging mode determined by the first network device and the target paging mode determined by the second network device may be different.

However, it does not affect correctness of paging, because at a same moment, the terminal device is located in coverage of only a specific terminal device, it only needs to be ensured that the terminal device can correctly receive paging from a network device with coverage that the terminal device is located in.

When the terminal device is located in coverage of the first network device, based on the implementation described above, the terminal device and the first network device determine a same target paging mode. Therefore, the terminal device can correctly receive paging. In this case, although the second network device may determine another target paging mode for paging the terminal device, because the terminal device does not receive the paging message, correctness of paging is not affected.

In addition, when the terminal device is located in coverage of the second network device, based on the implementation described above, the terminal device and the second network device determine a same target paging mode. Therefore, the terminal device can correctly receive paging. In this case, although the first network device may determine another target paging mode for paging the terminal device, because the terminal device does not receive the paging message, correctness of paging is not affected.

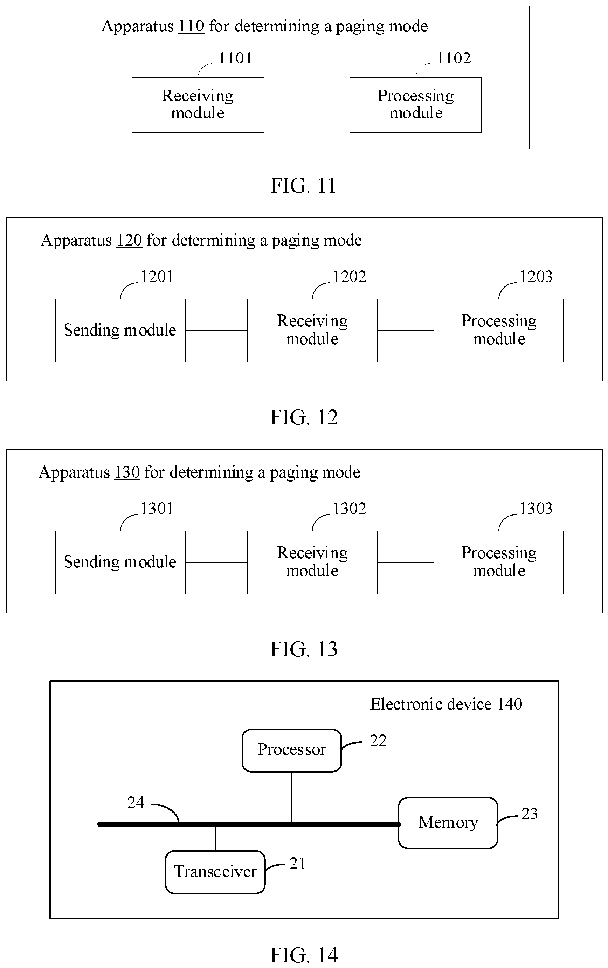

FIG. 11 is a schematic diagram 1 of a structure of an apparatus for determining a paging mode according to an embodiment of this application. As shown in FIG. 11, the apparatus 110 includes: a receiving module 1101 and a processing module 1102.

The receiving module 1101 is configured to receive first indication information sent by a first network device, where the first indication information indicates a first paging mode supported by the first network device.

The receiving module 1101 is further configured to receive, when the terminal device moves into coverage of a second network device, second indication information sent by the second network device, where the second indication information indicates a second paging mode supported by the second network device.

The processing module 1102 is configured to determine, based on the first paging mode, the second paging mode, and a third paging mode corresponding to the terminal device, a target paging mode for receiving a paging message.

The apparatus provided in this embodiment may be configured to execute the technical solutions of the foregoing method embodiments. The implementation principles and technical effects thereof are similar, and details are not described again in this embodiment.

FIG. 12 is a schematic diagram 2 of a structure of an apparatus for determining a paging mode according to an embodiment of this application. As shown in FIG. 12, the apparatus 120 includes: a sending module 1201, a receiving module 1202, and a processing module 1203.

The sending module 1201 is configured to send first indication information to a terminal device, where the first indication information indicates a first paging mode supported by the first network device.

The receiving module 1202 is configured to receive a first paging message sent by a core network device, where the first paging message includes a third paging mode corresponding to the terminal device.

The processing module 1203 is configured to determine, based on the first paging mode and the third paging mode, a target paging mode for sending a paging message.

The apparatus provided in this embodiment may be configured to execute the technical solutions of the foregoing method embodiments. The implementation principles and technical effects thereof are similar, and details are not described again in this embodiment.

FIG. 13 is a schematic diagram 3 of a structure of an apparatus for determining a paging mode according to an embodiment of this application. As shown in FIG. 13, the apparatus 130 includes: a sending module 1301, a receiving module 1302, and a processing module 1303.

The sending module 1301 is configured to send second indication information to a terminal device, where the second indication information indicates a second paging mode supported by the second network device.

The receiving module 1302 is configured to receive a second paging message sent by the first network device, where the second paging message includes a third paging mode corresponding to the terminal device.

The processing module 1303 is configured to determine, based on the second paging mode and the third paging mode, a target paging mode for sending a paging message.

The apparatus provided in this embodiment may be configured to execute the technical solutions of the foregoing method embodiments. The implementation principles and technical effects thereof are similar, and details are not described again in this embodiment.

FIG. 14 is a schematic diagram of a structure of an electronic device according to an embodiment of this application. The electronic device may be the terminal device, the network device, or the core network device described above.

Referring to FIG. 14, an electronic device 140 may include: a transceiver 21, a memory 22, and a processor 23. The transceiver 21 may include a transmitter and/or a receiver. The transmitter may further be referred to as a similar description such as a sender, a sending set, a sending port, or a sending interface. The receiver may further be referred to as a similar description such as a receiver, a receiving set, a receiving port, or a receiving interface. For example, the transceiver 21, the memory 22, and the processor 23 are connected to each other by a bus 24.

The memory 22 is configured to store program instructions. The processor 23 is configured to execute the program instructions stored in the memory, to enable the electronic device to perform the method for determining a paging mode according to any one of the foregoing. The receiver of the transceiver 21 may be configured to perform a receiving function of the electronic device in the foregoing method for determining a paging mode.

An embodiment of this application provides a chip. The chip includes a processor, and the processor is configured to invoke a computer program in a memory, to perform the technical solutions in the foregoing embodiments. Their implementation principles and technical effects are similar those in the related embodiments, and details are not described herein again.

An embodiment of this application further provides a computer-readable storage medium. The computer-readable storage medium has a computer program stored therein. The computer program, when executed by a processor, implements the foregoing method. The method described in the foregoing embodiments may be fully or partially implemented by software, hardware, firmware, or any combination thereof. If implemented in software, the functions may be stored in or transmitted over a computer-readable medium as one or more instructions or code. The computer-readable medium may include a computer storage medium and a communication medium, and may also include any medium that enables a computer program to be transmitted from one place to another. The storage medium may be any target medium accessible to a computer.

In a possible implementation, the computer-readable medium may include a RAM, a ROM, a compact disc read-only memory (compact disc read-only memory, CD-ROM) or other disc storage, a disk storage medium or a magnetic storage device, or any other medium that aims to carry or store required program code in a form of an instruction or a data structure and that is accessible by a computer. In addition, any connection is properly referred to as a computer-readable medium. For example, if software is transmitted from a website, a server or another remote source by using a coaxial cable, an optical fiber cable, a twisted pair, a digital subscriber line (Digital Subscriber Line, DSL) or wireless technologies such as infrared ray, radio and microwave, the coaxial cable, optical fiber cable, twisted pair, DSL or wireless technologies such as infrared ray, radio and microwave are included in fixation of a medium to which they belong. For example, a disk and a disc used by this application include a compact disc, a laser disc, an optical disc, a digital versatile disc (Digital Versatile Disc, DVD), a floppy disk, and a Blu-ray disc. The disk generally magnetically reproduces data, and the disc optically reproduces data by using laser. The foregoing combination should also be included in the scope of the computer-readable medium.

An embodiment of this application provides a computer program product. The computer program product includes a computer program. The computer program, when run, causes a computer to perform the foregoing method.

Embodiments of this application are described with reference to the flowcharts and/or block diagrams of the method, the device (system), and the computer program product according to embodiments of this application. It should be understood that computer program instructions may be for implementing each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processing unit of any other programmable device to generate a machine, so that the instructions executed by a computer or a processing unit of any other programmable data processing device generate an apparatus for implementing a specific function in one or more processes in the flowcharts and/or in one or more blocks in the block diagrams.

The objectives, technical solutions, and benefits of this application are further described in detail in the foregoing specific implementations. It should be understood that the foregoing descriptions are merely specific implementations of this application, but are not intended to limit the protection scope of this application. Any modification, equivalent replacement, or improvement made within the spirit and principle of this application shall fall within the protection scope of this application.

## Claims

1. A method for determining a paging mode, applied to a terminal device, the method comprising:
receiving first indication information sent by a first network device, wherein the first indication information indicates a first paging mode supported by the first network device;
receiving, when the terminal device moves into coverage of a second network device, second indication information sent by the second network device, wherein the second indication information indicates a second paging mode supported by the second network device; and
determining, based on the first paging mode, the second paging mode, and a third paging mode corresponding to the terminal device, a target paging mode for receiving a paging message.

2. The method according to claim 1, wherein the third paging mode is a paging mode supported by the terminal device, and the method further comprises:
sending third indication information to the first network device, wherein the third indication information indicates the third paging mode.

3. The method according to claim 1, wherein the third paging mode is a paging mode negotiated by the terminal device and a core network device, and the method further comprises:
sending fourth indication information to the core network device, wherein the fourth indication information indicates a fourth paging mode supported by the terminal device; and
receiving first configuration information sent by the core network device, wherein the first configuration information indicates the third paging mode, wherein the third paging mode is determined by the core network device in the fourth paging mode.

4. The method according to claim 2 or 3, wherein the third indication information comprises a receiver type, wherein the receiver type comprises at least one of the following: a low-power receiver and a main receiver, wherein
the receiver type indicates the third paging mode.

5. The method according to claim 4, wherein if the receiver type comprises only the low-power receiver, the third paging mode comprises a wakeup signal WUS-based paging mode;
if the receiver type comprises only the main receiver, the third paging mode comprises: a paging early indication PEI-based paging mode and a paging mode of decoding a physical downlink shared channel PDCCH at a paging occasion PO according to a cycle; and
if the receiver type comprises the low-power receiver and the main receiver, the third paging mode comprises: the WUS-based paging mode, the PEI-based paging mode, and the paging mode of decoding a PDCCH at a PO according to a cycle.

6. The method according to any one of claims 2 to 5, wherein the third indication information comprises the third paging mode, and the third paging mode comprises at least one of the following: the WUS-based paging mode, the PEI-based paging mode, and the paging mode of decoding a PDCCH at a PO according to a cycle.

7. The method according to any one of claims 2 to 6, wherein the third indication information comprises a first parameter associated with a paging mode, wherein the paging mode associated with the first parameter is the third paging mode.

8. The method according to any one of claims 2 to 7, wherein the third indication information is sent through UE capability information.

9. The method according to any one of claims 1 to 8, wherein when the terminal device is in coverage of the first network device, the target paging mode is a paging mode with a highest priority in at least one paging mode that exists in both the first paging mode and the third paging mode.

10. The method according to any one of claims 1 to 8, wherein when the terminal device is in the coverage of the second network device, the target paging mode is a paging mode with a highest priority in at least one paging mode that exists in both the second paging mode and the third paging mode.

11. The method according to claim 9 or 10, wherein a priority of a paging mode is pre-configured; or the priority of the paging mode is indicated by second configuration information sent by the first network device or the second network device.

12. The method according to any one of claims 1 to 11, wherein the first indication information is sent by the first network device via broadcast signaling; and
the second indication information is sent by the second network device via broadcast signaling.

13. The method according to any one of claims 1 to 12, wherein the method further comprises:
receiving fifth indication information sent by the first network device via unicast signaling, wherein the fifth indication information indicates a fifth paging mode used by the terminal device for receiving the paging message.

14. The method according to claim 13, wherein if the fifth indication information sent via unicast signaling exists, the fifth paging mode is determined as the paging mode with a highest priority.

15. A method for determining a paging mode, applied to a first network device, the method comprising:
sending first indication information to a terminal device, wherein the first indication information indicates a first paging mode supported by the first network device;
receiving a first paging message sent by a core network device, wherein the first paging message comprises a third paging mode corresponding to the terminal device; and
determining, based on the first paging mode and the third paging mode, a target paging mode for sending a paging message.

16. The method according to claim 15, wherein the third paging mode is a paging mode supported by the terminal device, and the method further comprises:
receiving third indication information sent by the terminal device, wherein the third indication information indicates the third paging mode.

17. The method according to claim 16, further comprising:
sending the third indication information to the core network device.

18. The method according to claim 15, wherein the third paging mode is a paging mode negotiated by the terminal device and the core network device.

19. The method according to any one of claims 16 to 18, wherein the third indication information comprises a receiver type, wherein the receiver type comprises at least one of the following: a low-power receiver and a main receiver, wherein
the receiver type indicates the third paging mode.

20. The method according to claim 19, wherein if the receiver type comprises only the low-power receiver, the third paging mode comprises a WUS-based paging mode;
if the receiver type comprises only the main receiver, the third paging mode comprises: a PEI-based paging mode and a paging mode of decoding a PDCCH at a PO according to a cycle; and
if the receiver type comprises the low-power receiver and the main receiver, the third paging mode comprises: the WUS-based paging mode, the PEI-based paging mode, and the paging mode of decoding a PDCCH at a PO according to a cycle.

21. The method according to any one of claims 16 to 20, wherein the third indication information comprises the third paging mode, and the third paging mode comprises at least one of the following: the WUS-based paging mode, the PEI-based paging mode, and the paging mode of decoding a PDCCH at a PO according to a cycle.

22. The method according to any one of claims 16 to 21, wherein the third indication information comprises a first parameter associated with a paging mode, wherein the paging mode associated with the first parameter is the third paging mode.

23. The method according to any one of claims 16 to 22, wherein the third indication information is sent through UE capability information.

24. The method according to any one of claims 15 to 23, wherein the target paging mode is a paging mode with a highest priority in at least one paging mode that exists in both the first paging mode and the third paging mode.

25. The method according to claim 24, wherein a priority of a paging mode is pre-configured; or
the method further comprises:
sending second configuration information to the terminal device, wherein the second configuration information indicates the priority of the paging mode.

26. The method according to any one of claims 15 to 25, wherein the method further comprises:
sending fifth indication information to the terminal device via unicast signaling, wherein the fifth indication information indicates a fifth paging mode used by the terminal device for receiving the paging message.

27. The method according to claim 26, wherein if the fifth indication information sent via unicast signaling exists, the fifth paging mode is determined as the paging mode with a highest priority.

28. The method according to any one of claims 15 to 27, wherein after the receiving a first paging message sent by a core network device, the method further comprises:
sending a second paging message to a second network device, wherein the second paging message comprises the third paging mode corresponding to the terminal device.

29. The method according to claim 28, wherein the second paging message further comprises the fifth paging mode indicated by the fifth indication information.

30. A method for determining a paging mode, applied to a second network device, the method comprising:
sending second indication information to a terminal device, wherein the second indication information indicates a second paging mode supported by the second network device;
receiving a second paging message sent by the first network device, wherein the second paging message comprises a third paging mode corresponding to the terminal device; and
determining, based on the second paging mode and the third paging mode, a target paging mode for sending a paging message.

31. The method according to claim 30, wherein the target paging mode is a paging mode with a highest priority in at least one paging mode that exists in both the second paging mode and the third paging mode.

32. The method according to claim 31, wherein a priority of a paging mode is pre-configured; or
the method further comprises:
sending second configuration information to the terminal device, wherein the second configuration information indicates the priority of the paging mode.

33. The method according to any one of claims 30 to 32, wherein the second paging message further comprises a fifth paging mode, wherein the fifth paging mode is a paging mode that the first network device instructs, via unicast signaling, the terminal device to use.

34. The method according to claim 33, wherein if the second paging message comprises the fifth paging mode, the fifth paging mode is determined as the paging mode with a highest priority.

35. A terminal device, comprising a processor and a memory, wherein
the memory has computer executable instructions stored therein; and
the processor executes the computer-executable instructions stored in the memory, to enable the terminal device to perform the method according to any one of claims 1 to 14.

36. A network device, comprising a processor and a memory, wherein
the memory has computer executable instructions stored therein; and
the processor executes the computer-executable instructions stored in the memory, to enable the network device to perform the method according to any one of claims 15 to 34.

37. A computer-readable storage medium, having a computer program stored therein, wherein the computer program, when executed by a processor, implements the method according to any one of claims 1 to 34.

38. A computer program product, comprising a computer program, wherein the computer program, when run, enables a computer to perform the method according to any one of claims 1 to 34.

39. A system for determining a paging method, comprising a terminal device, a first network device, and a second network device, wherein
the first network device sends first indication information to the terminal device, wherein the first indication information indicates a first paging mode indicated by the first network device;
the second network device sends second indication information to the terminal device, wherein the second indication information indicates a second paging mode supported by the second network device; and
when the terminal device is in coverage of the first network device, the terminal device determines, based on the first paging mode and a third paging mode corresponding to the terminal device, a target paging mode for receiving a paging message; or when the terminal device moves into coverage of the second network device, the terminal device determines the target paging mode based on the second paging mode and the third paging mode.

40. The system according to claim 39, wherein the terminal device is configured to perform the method according to any one of claims 1 to 14; the first network device is configured to perform the method according to any one of claims 15 to 29; and the second network device is configured to perform the method according to any one of claims 30 to 34.
